(19) Europäisches Patentamt
European Patent Office
Office européen des brevets

(11) **EP 2 200 757 B1**

(12) **EUROPEAN PATENT SPECIFICATION**

(45) Date of publication and mention
of the grant of the patent:
**22.10.2014 Bulletin 2014/43**

(51) Int Cl.:
***B05D 7/00*** *(2006.01)*     ***B29B 9/16*** *(2006.01)*
***C08J 3/12*** *(2006.01)*

(21) Application number: **08830632.9**

(22) Date of filing: **02.09.2008**

(86) International application number:
**PCT/US2008/075008**

(87) International publication number:
**WO 2009/035877 (19.03.2009 Gazette 2009/12)**

(54) **A COAT POLYMERIC PARTICULATE, AND A PROCESS FOR COATING A POLYMERIC PARTICULATE**

BESCHICHTETE POLYMERPARTIKEL UND VERFAHREN ZUR BESCHICHTUNG EINES POLYMERPARTIKELS

MATIÈRE PARTICULAIRE POLYMÈRE REVÊTUE, ET PROCÉDÉ POUR REVÊTIR UNE MATIÈRE PARTICULAIRE POLYMÈRE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.09.2007 US 972626 P**

(43) Date of publication of application:
**30.06.2010 Bulletin 2010/26**

(73) Proprietor: **Dow Global Technologies LLC
Midland, MI 48674 (US)**

(72) Inventors:
• **DHODAPKAR, Shrikant
Lake Jackson
TX 77566 (US)**
• **MCMICHAEL, James
Lake Jackson
TX 77566 (US)**

(74) Representative: **Böhm, Brigitte et al
Weickmann & Weickmann
Patentanwälte
Postfach 86 08 20
81635 München (DE)**

(56) References cited:
**EP-A1- 0 410 914**     **US-A- 3 779 785**
**US-A- 4 562 224**     **US-A1- 2004 236 023**
**US-A1- 2007 034 840**

**Description**

**Field of Invention**

The instant invention relates to a coated polymeric particulate according to claim 1, and a process for coating a polymeric particulate according to claim 8.

**Background of the Invention**

Some polymeric particulates may deform over time when exposed to stress and temperature conditions experienced during shipment. Additionally, the surfaces of polymeric particulates in contact with each other can sinter together at the interface thereby creating a bond. The combined effect of deformation and bonding at the contact points makes the polymeric particulates mass appear blocky.

Blockiness refers to the lumpy appearance of polymeric particulates in bags, boxes or railcars. In worst situation, the entire mass of the polymeric particulates may become a single lump or a block (hence called massing). This can be contrasted with polymeric particulates, where the polymeric particulates remain free-flowing regardless of stress, temperature and time history during shipment.

The blocking or massing of polymeric particulates creates a significant problem for end users. Blocky polymeric particulates are difficult to handle, and are especially problematic during blending, metering and feeding into extruders. The blocking problem applies to a wide variety of ethylene-alpha olefin copolymers, ethylene-propylene copolymers, EPDM, and EVA polymers.

Similarly, low molecular weight fraction component can migrate to the surface of a particle in low-crystalline polyolefins causing stickiness or tackiness. This results in significant problems during subsequent handling and processing in post-pelletization process.

A coated polymeric particulate and a process for coating a polymeric particulate is disclosed in EP 0 410 914 A1.

Despite the research efforts in improving blockiness or stickiness in the past, there is still a need for a coated polymeric particulates having improved blocking and stickiness properties, and there is also a need for a coating process for polymeric particulates having improved blocking and stickiness properties.

**Summary of the Invention**

The instant invention is a coated polymeric particulate, and a process for coating a polymeric particulate. The coated polymeric particulate includes a polymeric particulate; and a coating composition present on at least a portion of at least one surface of the polymeric particulate. The coating includes an interconnected media; and at least one discrete island at least partially embedded in the interconnected media. The process for coating a polymeric particulate includes the following steps: (1) selecting a polymeric particulate; (2) selecting an aqueous dispersion comprising (a) a small particle component, wherein the small particle component comprises a polyolefin polymer having an average particle size in the range of 0.02 to 0.15 $\mu$m; (b) a large particle component, wherein the large particle component comprises a polyolefin polymer having an average particle size in the range of 0.3 to 0.8 $\mu$m; and (c) water; (3) applying the aqueous dispersion to the polymeric particulate; (4) thereby coating the polymeric particulate.

In one embodiment, the instant invention provides a coated polymeric particulate comprising a polymeric particulate; and a coating composition present on at least a portion of at least one surface of the polymeric particulate, wherein the coating composition comprises an interconnected media; and at least one discrete island at least partially embedded in said interconnected media.

In an alternative embodiment, the instant invention provides a coated polymeric particulate comprising the coating application of a polymeric particulate; and a coating composition present on at least a portion of at least one surface of the polymeric particulate, wherein the coating composition comprises an aqueous dispersion comprising: (a) a small particle component, wherein the small particle component comprises a polyolefin polymer having an average particle size in the range of 0.02 to 0.15 $\mu$m; (b) a large particle component, wherein the large particle component comprises a polyolefin polymer having an average particle size in the range of 0.3 to 0.8 $\mu$m; and (c) water.

In an alternative embodiment, the instant invention provides a coated polymeric particulate comprising the coating application of a polymeric particulate; and a coating composition present on at least a portion of at least one surface of the polymeric particulate, wherein the coating composition comprises an aqueous dispersion comprising: (a) a small particle component, wherein the small particle component comprises a polyolefin wax having a viscosity of less than 6000 cps at 350 °F. (~176.6 °C.); (b) a large particle component, wherein the large particle component comprises a non-wax polyolefin having a viscosity of equal or greater than 6000 cps at 350 °F. (~176.6 °C.); and (c) water.

In an alternative embodiment, the instant invention further provides a process for coating a polymeric particulate comprising the following steps: (1) selecting a polymeric particulate; (2) selecting an aqueous dispersion comprising (a) a small particle component, wherein the small particle component comprises a polyolefin polymer having an average particle size in the range of 0.02 to 0. 15 $\mu$m; (b) a large particle component, wherein the large particle component comprises a polyolefin polymer having an average particle size in the range of 0.3 to 0.8 $\mu$m; and (c) water; (3) applying the aqueous dispersion to the polymeric particulate; (4) thereby coating the polymeric particulate.

In an alternative embodiment, the instant invention further provides a process for coating a polymeric particulate comprising the following steps: (1) selecting a polymeric particulate; (2) selecting an aqueous dispersion comprising (a) a small particle component, wherein the small particle component comprises a polyolefin wax having a viscosity of less than 6000 cps at 350 °F. (~176.6 °C.); (b) a large particle component, wherein the large particle component comprises a non-wax polyolefin having a viscosity of equal or greater than 6000 cps at 350 °F. (~176.6 °C.); and (c) water; (3) applying the aqueous dispersion to the polymeric particulate; (4) thereby coating the polymeric particulate.

In an alternative embodiment, the instant invention further provides a process for coating a polymeric particulate comprising the following steps: (1) selecting a polymeric particulate; (2) selecting a first aqueous dispersion comprising a small particle component, wherein the small particle component comprises a polyolefin wax having a viscosity of less than 6000 cps at 350 °F. (~176.6 °C.); (3) selecting a second dispersion comprising a large particle component, wherein the large particle component comprises a non-wax polyolefin having a viscosity of equal or greater than 6000 cps at 350 °F. (~176.6 °C.); (4) applying the first dispersion and the second dispersions to the polymeric particulate; (5) thereby coating said polymeric particulate.

In an alternative embodiment, the instant invention further provides a process for coating a polymeric particulate comprising the following steps: (1) selecting a polymeric particulate; (2) selecting a first aqueous dispersion comprising a small particle component, wherein the small particle component comprises a polymer having an average particle size in the range of 0.02 to 0.15 $\mu$m; (3) selecting a second dispersion comprising a large particle component, wherein the large particle component comprises a polymer having an average particle size in the range of 0.3 to 0.8 $\mu$m; (4) applying the first dispersion and the second dispersions to the polymeric particulate; and (5) thereby coating said polymeric particulate.

In an alternative embodiment, the instant invention provides a coated polymeric particulate, and a process for coating the same, in accordance with any of the preceding embodiments, except that the interconnected media is derived from a polyolefin wax having a viscosity of less than 6000 cps at 350 °F. (~176.6 °C.), and wherein the at least one discrete island is derived from a non-wax polyolefin having a viscosity of equal or greater than 6000 cps at 350 °F. (~176.6 °C.).

In an alternative embodiment, the instant invention provides a coated polymeric particulate, and a process for coating the same, in accordance with any of the preceding embodiments, except that the polyolefin wax has an average particle size in the range of 0.02 to 0.15 $\mu$m, and wherein said non-waxed polyolefin has an average particle size in the range of 0.3 to 10$\mu$m.

In an alternative embodiment, the instant invention provides a coated polymeric particulate, and a process for coating the same, in accordance with any of the preceding embodiments, except that the interconnected media is derived from a small polymer particle component having an average particle size in the range of 0.02 to 0.15 $\mu$m, and wherein the at least one discrete island is derived from a large polymer particle component having an average particle size in the range of 0.3 to 0.8 $\mu$m.

In an alternative embodiment, the instant invention provides a coated polymeric particulate, and a process for coating the same, in accordance with any of the preceding embodiments, except that the small polymer particle component is polyolefin wax having a viscosity of less than 6000 cps at 350 °F. (~176.6 °C.), and wherein the large polymer particle component is a non-wax polyolefin having a viscosity of equal or greater than 6000 cps at 350 °F. (~176.6 °C.).

In an alternative embodiment, the instant invention provides a coated polymeric particulate, and a process for coating the same, in accordance with any of the preceding embodiments, except that the polymeric particulate has a morphology selected from the group consisting of powder, micropellets, and pellets.

In an alternative embodiment, the instant invention provides a coated polymeric particulate, and a process for coating the same, in accordance with any of the preceding embodiments, except that the polymeric particulate is a polyolefin.

In an alternative embodiment, the instant invention provides a process for coating a polymeric particulate, in accordance with any of the preceding embodiments, except that the process further comprises the step of removing at least a portion of the water.

In an alternative embodiment, the instant invention provides a process for coating a polymeric particulate, in accordance with any of the preceding embodiments, except that the first dispersion and said second dispersion are admixed together prior to being applied to said polymeric particulate.

In an alternative embodiment, the instant invention provides a process for coating a polymeric particulate, in accordance with any of the preceding embodiments, except that the first dispersion and the second dispersion are applied to the polymeric particulate simultaneously.

**Brief Description of the Drawings**

For the purpose of illustrating the invention, there is shown in the drawings a form that is exemplary; it being understood, however, that this invention is not limited to the precise arrangements and instrumentalities shown.

**Fig. 1** is an illustrative diagram showing a first process embodiment according to instant invention;
**Fig. 2** is an illustrative diagram showing a second process embodiment according to instant invention;
**Fig. 3** is an illustrative diagram showing a third process embodiment according to instant invention;
**Fig. 4** is an illustrative diagram showing a fourth process embodiment according to instant invention;
**Fig. 5** is an illustrative diagram showing a fifth process embodiment according to instant invention;
**Fig. 6** is an illustrative diagram showing a sixth process embodiment according to instant invention;
**Fig. 7** is a photograph of the coated polymeric particulates of the instant inventions via Scanning Electron Microscopy at 50X magnification; and
**Fig. 8** is a photograph of the coated polymeric particulates of the instant inventions via Scanning Electron Microscopy at 500X magnification.
**Fig. 9** is a graph illustrating that the pellets coated with the inventive coating composition of Example 8 having significant improvement in stickiness as compared to the talc coated pellets.
**Fig. 10** is a graph illustrating that the pellets coated with the inventive coating composition of Example 8 having significant improvement in blocking performance as compared to the talc coated pellets.
**Fig. 11** is a graph illustrating that the pellets coated with the inventive coating composition of Example 9 having significant improvement in stickiness as compared to the talc coated pellets.
**Fig. 12** is a graph illustrating that the pellets coated with the inventive coating composition of Example 9 having significant improvement in blocking performance as compared to the talc coated pellets.
**Fig. 13** is a graph illustrating that the pellets coated with the inventive coating composition of Example 10 (coating at 5000 ppm level) having significant improvement in stickiness as compared to the talc coated pellets.

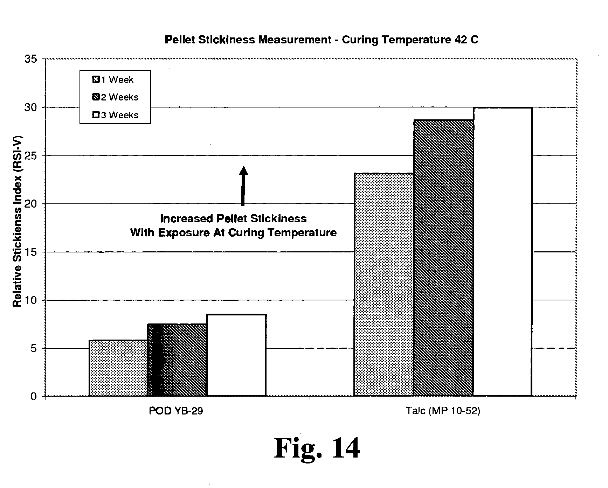

**Fig. 14** is a graph illustrating that the pellets coated with the inventive coating composition of Example 10 (coating at 5000 ppm level) having significant improvement in blocking performance as compared to the talc coated pellets.

**Detailed Description of the Invention**

The instant invention is a coated polymeric particulate, and a process for coating a polymeric particulate. The coated polymeric particulate includes a polymeric particulate; and a coating composition present on at least a portion of at least one surface of the polymeric particulate. The process for coating a polymeric particulate includes the following steps: (1) selecting a polymeric particulate; (2) selecting a coating composition; (3) applying the coating composition to the polymeric particulate; (4) thereby coating the polymeric particulate.

The polymeric particulate may be any polymeric material; for example, the polymeric material may be an olefin polymer. Exemplary olefin polymers include, but are not limited to, homopolymers of ethylene, and copolymers of ethylene and at least one ethylenically unsaturated monomer selected from the group consisting of $C_3$-$C_{10}$ alpha monoolefins; $C_1$-$C_{12}$ alkyl esters of $C_3$-$C_{20}$ monocarboxylic acids; unsaturated $C_3$-$C_{20}$ mono- or dicarboxylic acids; anhydrides of unsaturated $C_4$-$C_8$ dicarboxylic acids; and vinyl esters of saturated $C_2$-$C_{18}$ carboxylic acids. Exemplary olefin polymers further include, but are not limited to, homopolymers of propylene, and copolymers of propylene and at least one ethylenically unsaturated monomer selected from the group consisting of $C_2$ and $C_4$-$C_{10}$ alpha monoolefins; $C_1$-$C_{12}$ alkyl esters of $C_3$-$C_{20}$ monocarboxylic acids; unsaturated $C_3$-$C_{20}$ mono- or dicarboxylic acids; anhydrides of unsaturated $C_4$-$C_8$ dicarboxylic acids; and vinyl esters of saturated $C_2$-$C_{18}$ carboxylic acids. The olefin polymers are preferably elstomeric polymers. Exemplary elastomeric polymers include, but are not limited to, elastomeric ethylene copolymers such as ethylene/alpha-olefin copolymers or elastomeric propylene copolymers such as propylene/alpha-olefin copolymers. Elastomeric ethylene copolymers such as ethylene/alpha-olefin copolymers are copolymers of ethylene with at least one $C_3$-$C_8$ alpha-olefin (preferably an aliphatic alpha-olefin) comonomer, and optionally, a polyene comonomer, for example, a conjugated diene, a nonconjugated diene, a triene, etc. Elastomeric propylene copolymers such as propylene/alpha-olefin copolymers are copolymers of propylene with at least one $C_2$ or $C_4$-$C_8$ alpha-olefin (preferably an aliphatic alpha-olefin) comonomer, and optionally, a polyene comonomer, for example, a conjugated diene, a nonconjugated diene, a triene, etc. Examples of the $C_2$-$C_8$ alpha-olefins include, but are not limited to, ethene, propene, 1-butene, 4-methyl-1-pentene, 1-hexene, and 1-octene. The alpha-olefin can also contain a cyclic structure such as cyclohexane or cyclopentane, resulting in an alpha-olefin such as 3-cyclohexyl-1-propene (allyl-cyclohexane) and vinyl-cyclohexane. Although not alpha-olefins in the classical sense of the term, for purposes of this invention certain cyclic olefins, such as norbornene and related olefins, are alpha-olefins and can be used in place of some or all of the alpha-olefins described above. Similarly, styrene and its related olefins (for example, alphamethylstyrene, etc.) are alpha-olefins for purposes of this invention.

Polyenes are unsaturated aliphatic or alicyclic compounds containing more than four carbon atoms in a molecular chain and having at least two double and/or triple bonds, for example, conjugated and nonconjugated dienes and trienes. Examples of nonconjugated dienes include aliphatic dienes such as 1,4-pentadiene, 1,4-hexadiene, 1,5-hexadiene, 2-methyl-1,5-hexadiene, 1,6-heptadiene, 6-methyl-1,5-heptadiene, 1,6-octadiene, 1,7-octadiene, 7-methyl-1,6-octadiene, 1,13-tetradecadiene, 1,19-eicosadiene, and the like; cyclic dienes such as 1,4-cyclohexadiene, bicyclo[2.2.1]hept-2,5-diene, 5-ethylidene-2-norbornene, 5-methylene-2-norbornene, 5-vinyl-2-norbornene, bicyclo[2.2.2]oct-2,5-diene, 4-vinylcyclohex-1-ene, bicyclo[2.2.2]oct-2,6-diene, 1,7,7-trimethylbicyclo-[2.2.1]hept-2,5-diene, dicyclopentadiene, methyltetrahydroindene, 5-allylbicyclo[2.2.1]hept-2-ene, 1,5-cyclooctadiene, and the like; aromatic dienes such as 1,4-diallylbenzene, 4-allyl-1H-indene; and trienes such as 2,3-diisopropenylidene-5-norbornene, 2-ethylidene-3-isopropylidene-5-norbornene, 2-propenyl-2,5-norbornadiene, 1,3,7-octatriene, 1,4,9-decatriene, and the like; with 5-ethylidene-2-norbornene, 5-vinyl-2-norbornene and 7-methyl-1,6-octadiene preferred nonconjugated dienes.

Examples of conjugated dienes include butadiene, isoprene, 2,3-dimethylbutadiene-1,3, 1,2-dimethylbutadiene-1,3, 1,4-dimethylbutadiene-1,3, 1-ethylbutadiene-1,3, 2-phenylbutadiene-1,3, hexadiene-1,3, 4-methylpentadiene-1,3, 1,3-pentadiene ($CH_3CH=CH-CH=CH_2$; commonly called piperylene), 3-methyl-1,3-pentadiene, 2,4-dimethyl-1,3-pentadiene, 3-ethyl-1,3-pentadiene, and the like; with 1,3-pentadiene a preferred conjugated diene.

Examples of trienes include 1,3,5-hexatriene, 2-methyl-1,3,5-hexatriene, 1,3,6-heptatriene, 1,3,6-cycloheptatriene, 5-methyl-1,3,6-heptatriene, 5-methyl-1,4,6-heptatriene, 1,3,5-octatriene, 1,3,7-octatriene, 1,5,7-octatriene, 1,4,6-octatriene, 5-methyl-1,5,7-octatriene, 6-methyl-1,5,7-octatriene, 7-methyl-1,5,7-octatriene, 1,4,9-decatriene and 1,5,9-cyclodecatriene.

Exemplary ethylene copolymers include ethylene/propylene, ethylene/butene, ethylene/1-octene, ethylene/5-ethylidene-2-norbornene, ethylene/5-vinyl-2-norbornene, ethylene/-1,7-octadiene, ethylene/7-methyl-1,6-octadiene, ethylene/styrene and ethylene/1,3,5-hexatriene. Exemplary propylene copolymers include propylene/ethylene, propylene /butene, propylene /1-octene. Exemplary terpolymers include ethylene/propylene/1-octene, ethylene/butene/1-octene, ethylene/propylene/5-ethylidene-2-norbornene, ethylene/butene/5-ethylidene-2-norbornene, ethylene/butene/styrene, ethylene/1-octene/5-ethylidene-2-norbornene, ethylene/propylene/1,3-pentadiene, ethylene/propylene/7-methyl-1,6-octadiene, ethylene/butene/7-methyl-1,6-octadiene, ethylene/1-octene/1,3-pentadiene and ethylene/propylene/1,3,5-hexatriene. Exemplary tetrapolymers include ethylene/propylene/1-octene/diene (for example, ENB), ethylene/butene/1-octene/diene and ethylene/propylene/mixed dienes, for example, ethylene/propylene/5-ethylidene-2-norbornene/piperylene. In addition, the blend components can include minor amounts, for example, 0.05-0.5 percent by weight, of long chain branch enhancers, such as 2,5-norbornadiene (aka bicyclo[2,2,1]hepta-2,5-diene), diallylbenzene, 1,7-octadiene ($H_2C=CH(CH_2)_4CH=CH_2$), and 1,9-decadiene ($H_2C=CH(CH_2)_6CH=CH_2$).

In specific embodiments, polyolefins such as polypropylene, polyethylene, and copolymers thereof, and blends thereof, as well as ethylene-propylene-diene terpolymers, may be used. In some embodiments, olefinic polymers include homogeneous polymers described in U.S. Pat. No. 3,645,992 issued to Elston; high density polyethylene (HDPE) as described in U.S. Pat. No. 4,076,698 issued to Anderson; heterogeneously branched linear low density polyethylene (LLDPE); heterogeneously branched ultra low linear density polyethylene (ULDPE); homogeneously branched, linear ethylene/alpha-olefin copolymers; homogeneously branched, substantially linear ethylene/alpha-olefin polymers, which can be prepared, for example, by a process disclosed in U.S. Pat. Nos. 5,272,236 and 5,278,272, the disclosures of which are incorporated herein by reference; and high pressure, free radical polymerized ethylene polymers and copolymers such as low density polyethylene (LDPE).

Polymer compositions described in U.S. Pat. Nos. 6,566,446, 6,538,070, 6,448,341, 6,316,549, 6,111,023, 5,869,575, 5,844,045, or 5,677,383, each of which is incorporated herein by reference in its entirety, are also suitable in some embodiments. Of course, blends of polymers can be used as well. In some embodiments, the blends include two different Ziegler-Natta polymers. In other embodiments, the blends can include blends of a Ziegler-Natta and a metallocene polymer. In still other embodiments, the polymer used herein is a blend of two different metallocene polymers. In other embodiments polymers produced from single site catalysts may be used. In yet another embodiment, block or multi-block copolymers may be used in embodiments of the invention. Such polymers include those described and claimed in WO2005/090427 (having priority to U.S. Serial No. 60/553,906, filed March 7, 2004).

In some particular embodiments, the olefin polymer is a propylene-based copolymer or interpolymer. In some embodiments, the propylene/ethylene copolymer or interpolymer is characterized as having substantially isotactic propylene sequences. The term "substantially isotactic propylene sequences" and similar terms mean that the sequences have an isotactic triad (mm) measured by $^{13}$C NMR of greater than about 0.85, preferably greater than about 0.90, more preferably greater than about 0.92 and most preferably greater than about 0.93. Isotactic triads are well-known in the art and are described in, for example, U.S. Pat. No. 5,504,172 and WO 00/01745, which refer to the isotactic sequence in terms of a triad unit in the copolymer molecular chain determined by $^{13}$C NMR spectra.

In other particular embodiments, the olefin polymer may be ethylene vinyl acetate (EVA) based polymers. In other embodiments, the olefin polymer may be ethylene-methyl acrylate (EMA) based polymers. In other particular embodiments, the ethylene-alpha olefin copolymer may be ethylene-butene, ethylene-hexene, or ethylene-octene copolymers or interpolymers. In other particular embodiments, the propylene-alpha olefin copolymer may be a propylene-ethylene or a propylene-ethylene-butene copolymer or interpolymer.

In certain embodiments, the olefin polymer can be an ethylene-octene copolymer or interpolymer having a density between 0.863 and 0.911 g/cc and melt index (190°C with 2.16 kg weight) from 0.1 to 100 g/10 min. In other embodiments, the ethylene-octene copolymers may have a density between 0.863 and 0.902 g/cc and melt index (190°C with 2.16 kg weight) from 0.8 to 35 g/10 min.

In certain embodiments, the olefin polymer can be a propylene-ethylene copolymer or interpolymer having an ethylene content between 5 and 20 percent by weight and a melt flow rate (230°C with 2.16 kg weight) from 0.5 to 300 g/10 min. In other embodiments, the propylene-ethylene copolymer or interpolymer may have an ethylene content between 9 and 12 percent by weight and a melt flow rate (230°C with 2.16 kg weight) from 1 to 100 g/10 min.

In certain other embodiments, the olefin polymer can be a low density polyethylene having a density between 0.911 and 0.925 g/cc and melt index (190°C with 2.16 kg weight) from 0.1 to 100 g/10 min.

In other embodiments, the olefin polymer can have a crystallinity of less than 50 percent. In preferred embodiments, the crystallinity of the olefin polymer may be from 5 to 35 percent. In more preferred embodiments, the crystallinity can range from 7 to 20 percent.

In certain other embodiments, the olefin polymer can have a melting point of less than 110°C. In preferred embodiments, the melting point may be from 25 to 100°C. In more preferred embodiments, the melting point may be between 40 and 85°C.

In certain embodiments, the olefin polymer can have a weight average molecular weight greater than 20,000 g/mole. In one embodiment, the weight average molecular weight may be from 20,000 to 150,000 g/mole; in another embodiment, from 50,000 to 100,000 g/mole.

The olefin polymers also include olefin block copolymers, for example, ethylene multi-block copolymer, such as those described in the International Publication No. WO2005/090427 and U.S. Patent Application Serial No. 11/376,835. Such olefin block copolymer may be an ethylene/$\alpha$-olefin interpolymer:

(a) having a $M_w/M_n$ from 1.7 to 3.5, at least one melting point, $T_m$, in degrees Celsius, and a density, d, in grams/cubic centimeter, wherein the numerical values of $T_m$ and d corresponding to the relationship:

$$T_m > -2002.9 + 4538.5(d) - 2422.2(d)^2; \text{ or}$$

(b) having a $M_w/M_n$ from 1.7 to 3.5, and being characterized by a heat of fusion, $\Delta H$ in J/g, and a delta quantity, $\Delta T$, in degrees Celsius defined as the temperature difference between the tallest DSC peak and the tallest CRYSTAF peak, wherein the numerical values of $\Delta T$ and $\Delta H$ having the following relationships:

$$\Delta T > -0.1299(\Delta H) + 62.81 \text{ for } \Delta H \text{ greater than zero and up to 130 J/g,}$$

$$\Delta T \geq 48°C \text{ for } \Delta H \text{ greater than 130 J/g,}$$

wherein the CRYSTAF peak being determined using at least 5 percent of the cumulative polymer, and if less than 5 percent of the polymer having an identifiable CRYSTAF peak, then the CRYSTAF temperature being 30 °C; or

(c) being characterized by an elastic recovery, Re, in percent at 300 percent strain and 1 cycle measured with a compression-molded film of the ethylene/$\alpha$-olefin interpolymer, and having a density, d, in grams/cubic centimeter, wherein the numerical values of Re and d satisfying the following relationship when ethylene/$\alpha$-olefin interpolymer being substantially free of a cross-linked phase:

$$Re > 1481 - 1629(d); \text{ or}$$

(d) having a molecular fraction which elutes between 40 °C and 130 °C when fractionated using TREF, characterized in that the fraction having a molar comonomer content of at least 5 percent higher than that of a comparable random ethylene interpolymer fraction eluting between the same temperatures, wherein said comparable random ethylene interpolymer having the same comonomer(s) and having a melt index, density, and molar comonomer content (based on the whole polymer) within 10 percent of that of the ethylene/$\alpha$-olefin interpolymer; or

(e) having a storage modulus at 25 °C, G' (25 °C), and a storage modulus at 100 °C, G' (100 °C), wherein the ratio of G' (25 °C) to G' (100 °C) being in the range of 1:1 to 9:1.

The ethylene/$\alpha$-olefin interpolymer may also:

(a) have a molecular fraction which elutes between 40 °C and 130 °C when fractionated using TREF, characterized in that the fraction having a block index of at least 0.5 and up to about 1 and a molecular weight distribution, $M_w/M_n$, greater than about 1.3; or

(b) have an average block index greater than zero and up to about 1.0 and a molecular weight distribution, $M_w/M_n$, greater than about 1.3.

Those having ordinary skill in the art will recognize that the above list is a non-comprehensive listing of suitable polymers. It will be appreciated that the scope of the present invention is restricted by the claims only.

The olefin polymers can be produced using any conventional olefin polymerization technology known in the art. For example, polymerization may be accomplished at conditions well known in the art for Ziegler-Natta or Kaminsky-Sinn type polymerization reactions. The olefin polymers may also be made using a mono- or bis-cyclopentadienyl, indenyl, or fluorenyl transition metal (preferably Group 4) catalysts, constrained geometry catalysts, or metallocene catalysts. Metallocene catalysts and polymerization processes using these catalysts are described and taught in U.S. Patent 5,565,521. Suspension, solution, slurry, gas phase, solid-state powder polymerization or other process conditions may be employed if desired. A support, such as silica, alumina, or a polymer (such as polytetrafluoroethylene or a polyolefin) may also be employed if desired.

Inert liquids serve as suitable solvents for polymerization. Examples include straight and branched-chain hydrocarbons such as isobutane, butane, pentane, hexane, heptane, octane, and mixtures thereof; cyclic and alicyclic hydrocarbons such as cyclohexane, cycloheptane, methylcyclohexane, methylcycloheptane, and mixtures thereof; perfluorinated hydrocarbons such as perfluorinated $C_{4-10}$ alkanes; and aromatic and alkylsubstituted aromatic compounds such as benzene, toluene, xylene, and ethylbenzene. Suitable solvents also include liquid olefins that may act as monomers or comonomers including butadiene, cyclopentene, 1-hexene, 4-vinylcyclohexene, vinylcyclohexane, 3-methyl-1-pentene, 4-methyl-1-pentene, 1,4-hexadiene, 1-octene, 1-decene, styrene, divinylbenzene, allylbenzene, and vinyltoluene (including all isomers alone or in admixture). Mixtures of the foregoing are also suitable. If desired, normally gaseous olefins can be converted to liquids by application of pressure and used herein.

The polymer particulates are in the form of particulate solids ranging in size from powders to pellets. Powders are typically defined as particulate solids with an average particle size of less than 2000 microns. Pellets are particulate solids generally, but not exclusively, formed through extrusion and pelletization processes, with a typical average particle size greater than 2 mm, typically 2-10 mm, preferably 2-4 mm. Micropellets typically have an average particle size less than of a standard pellet yet greater than general commercial die capabilities. The average particle size of micropellets range from 300 microns to 2 mm. The micropellets generally exhibit a semi-spheroidal shape.

Blends of the particulate solids of the invention may be made using any known solid mixing or blending process. For example, in "Mixing of Powders", Handbook of Powder Science and Technology - Second Edition, Chapman and Hall, pp 568-585 (1997), Kaye mentioned a tumble mixer as a low shear method to generate a bulk mixture. One skilled in the mixing arts could use alternate mixing techniques, such as higher shear equipment described by Kaye, to potentially improve the uniformity of blend dispersion.

The coating composition comprises at one or more dispersions. The one or more dispersions may be any dispersion, for example, the one or more dispersions are aqueous dispersions.

In one embodiment the coating composition may comprise a dispersion comprising a small particle component, a large particular component, and a media component. Exemplary media components include, but are not limited to, water. The dispersion may further include a surfactant. The dispersion may have any pH; for example, the dispersion may have a pH of greater than 7. The dispersion may comprise about less than or equal to 75 percent by weight of solid content, that is, the combined weight of small particle component and large particle component. All individual values and subranges of less than or equal to 75 weight percent are included herein and disclosed herein; for example, the solid content weight percent can be from a lower limit of 5, 10, 15, 20, 25, 30, 35, 40, 45, 50, or 60 weight percent to an upper limit of 10, 15, 20, 25, 30, 35, 40, 45, 50, 60, 70, or 75 weight percent. For example, dispersion may comprise about less than or equal to 70 percent by weight of solid content, that is, the combined weight of small particle component and large particle component; or in the alternative, dispersion may comprise about less than or equal to 60 percent by weight of solid content, that is, the combined weight of small particle component and large particle component; or in the alternative, dispersion may comprise about less than or equal to 50 percent by weight of solid content, that is, the combined weight of small particle component and large particle component; or in the alternative, dispersion may comprise about less than or equal to 40 percent by weight of solid content, that is, the combined weight of small particle component and large particle component.

The small particle component may be any wax, for example, the small particle component may be a polyolefin wax. Such polyolefin waxes include, but are not limited to, oxidized polyolefins such as oxidized polyethylenes or oxidized polypropylenes. The small particle component may have any average particle size; for example, the small particle component may have an average particle size of less than 0.2 $\mu$m. All individual values and subranges of less than 0.2

μm are included herein and disclosed herein; for example, the average particle size of the small particle component can be from a lower limit of 0.02, 0.03, 0.04, 0.05, 0.06, 0.07, 0.10, or 0.15 μm to an upper limit of 0.03, 0.04, 0.05, 0.06, 0.07, 0.10, 0.15, or 0.2 μm. For example, the small particle component may have an average particle size in the range of 0.02 to 0.15 μm; or in the alternative, the small particle component may have an average particle size in the range of 0.02 to 0.10 μm; or in the alternative, the small particle component may have an average particle size in the range of 0.02 to 0.05 μm; or in the alternative, the small particle component may have an average particle size in the range of 0.03 to 0.05 μm. The small particle component may have any viscosity; for example, the small particle component may have a viscosity of less than 6000 cps at 350 °F. (~176.6 °C.). All individual values and subranges of less than 6000 cps at 350 °F. (~176.6 °C.) are included herein and disclosed herein; for example, the viscosity of the small particle component can be from a lower limit of 1000, 2000, 2500, 3000, 4000, or 5000 cps at 350 °F. (~176.6 °C.) to an upper limit of 1500, 2000, 2500, 3000, 4000, 5000, or 6000 cps at 350 °F. (~176.6 °C.). For example, the small particle component may have a viscosity in the range of less than 5000 cps at 350 °F. (~176.6 °C.); or in the alternative, the small particle component may have a viscosity in the range of less than 4000 cps at 350 °F. (~176.6 °C.); or in the alternative, the small particle component may have a viscosity in the range of less than 3000 cps at 350 °F. (~176.6 °C.); or in the alternative, the small particle component may have a viscosity in the range of less than 2500 cps at 350 °F. (~176.6 °C.). The small particle component may be polar; or in the alternative, the small particle component may be partially or fully neutralized, for example, with a base such as for example, but not limited to, potassium hydroxide (KOH). The dispersion may comprise about less than or equal to 50 percent by weight of small particle component. All individual values and subranges of less than or equal to 50 weight percent are included herein and disclosed herein; for example, the small particle component weight percent can be from a lower limit of 5, 10, 15, 20, 25, 30, 35, 40, or 45 weight percent to an upper limit of 10, 15, 20, 25, 30, 35, 40, 45, or 50 weight percent. For example, dispersion may comprise about less than or equal to 45 percent by weight of small particle component; or in the alternative, dispersion may comprise about less than or equal to 40 percent by weight of small particle component; or in the alternative, dispersion may comprise about less than or equal to 35 percent by weight of small particle component; or in the alternative, dispersion may comprise about less than or equal to 30 percent by weight of small particle component.

The large particle component may be any wax, non-wax polymer or combinations thereof. For example, the large particle component may be a polyolefin wax, a non-wax polyolefin, or combinations thereof. The dispersion may comprise about less than or equal to 50 percent by weight of large particle component. All individual values and subranges of less than or equal to 50 weight percent are included herein and disclosed herein; for example, the large particle component weight percent can be from a lower limit of 5, 10, 15, 20, 25, 30, 35, 40, or 45 weight percent to an upper limit of 10, 15, 20, 25, 30, 35, 40, 45, or 50 weight percent. For example, dispersion may comprise about less than or equal to 45 percent by weight of large particle component; or in the alternative, dispersion may comprise about less than or equal to 40 percent by weight of large particle component; or in the alternative, dispersion may comprise about less than or equal to 35 percent by weight of large particle component; or in the alternative, dispersion may comprise about less than or equal to 30 percent by weight of large particle component.

Exemplary polyolefin waxes include, but are not limited to, oxidized polyolefins such as oxidized polyethylenes or oxidized polypropylenes. The large polyolefin wax particle component may have any average particle size; for example, the large polyolefin wax particle component may have an average particle size in the range of 0.3 to 0.9 μm. All individual values and subranges in the range of 0.3 to 0.9 μm are included herein and disclosed herein; for example, the average particle size of the large polyolefin wax particle component can be from a lower limit of 0.3, 0.4, 0.5, 0.6, 0.7μm to an upper limit of 0.4, 0.5, 0.6, 0.7, or 0.8 μm. For example, the large polyolefin wax particle component may have an average particle size in the range of 0.3 to 0.9 μm; or in the alternative, the large polyolefin wax particle component may have an average particle size in the range of 0.3 to 0.8 μm; or in the alternative, the large polyolefin wax particle component may have an average particle size in the range of 0.3 to 0.7 μm; or in the alternative, the large polyolefin wax particle component may have an average particle size in the range of 0.3 to 0.6 μm. The large polyolefin wax particle component may have any viscosity; for example, the large polyolefin wax particle component may have a viscosity of less than 6000 cps at 350 °F. (~176.6 °C.). All individual values and subranges of less than 6000 cps at 350 °F. (~176.6 °C.) are included herein and disclosed herein; for example, the viscosity of the large polyolefin wax particle component can be from a lower limit of 1000, 2000, 2500, 3000, 4000, or 5000 cps at 350 °F. (~176.6 °C.) to an upper limit of 1500, 2000, 2500, 3000, 4000, 5000, or 6000 cps at 350 °F. (~176.6 °C.). For example, the large polyolefin wax particle component may have a viscosity in the range of less than 5000 cps at 350 °F. (~176.6 °C.); or in the alternative, the large polyolefin wax particle component may have a viscosity in the range of less than 4000 cps at 350 °F. (~176.6 °C.); or in the alternative, the large polyolefin wax particle component may have a viscosity in the range of less than 3000 cps at 350 °F. (~176.6 °C.); or in the alternative, the large polyolefin wax particle component may have a viscosity in the range of less than 2500 cps at 350 °F. (~176.6 °C.). The large polyolefin wax particle component may be polar; or in the alternative, the large polyolefin wax particle component may be partially or fully neutralized, for example, with a base such as, for example, but not limited to, potassium hydroxide (KOH).

Exemplary non-wax polymers include any non-oxidized polyolefins including, but not limited to, polyolefins such as homopolymers of ethylene, copolymers of ethylene and at least one ethylenically unsaturated monomer selected from the group consisting of $C_3$-$C_{10}$ alpha monoolefins; $C_1$-$C_{12}$ alkyl esters of $C_3$-$C_{20}$ monocarboxylic acids; unsaturated $C_3$-$C_{20}$ mono- or dicarboxylic acids; anhydrides of unsaturated $C_4$-$C_8$ dicarboxylic acids; and vinyl esters of saturated $C_2$-$C_{18}$ carboxylic acids, homopolymers of propylene, and copolymers of propylene and at least one ethylenically unsaturated monomer selected from the group consisting of $C_2$ and $C_4$-$C_{10}$ alpha monoolefins; $C_1$-$C_{12}$ alkyl esters of $C_3$-$C_{20}$ monocarboxylic acids; unsaturated $C_3$-$C_{20}$ mono- or dicarboxylic acids; anhydrides of unsaturated $C_4$-$C_8$ dicarboxylic acids; and vinyl esters of saturated $C_2$-$C_{18}$ carboxylic acids. The large polyolefin non-wax particle component may have any average particle size; for example, the large polyolefin non-wax particle component may have an average particle size in the range of greater than 0.2 $\mu$m. All individual values and subranges in the range of greater than 0.2 $\mu$m are included herein and disclosed herein; for example, the average particle size of the large polyolefin non-wax particle component can be from a lower limit of 0.3, 0.4, 0.5, 0.6, 0.7 $\mu$m to an upper limit of 0.8, 0.9, 1.0, 1.5, 2.0, 3.0, 4.0, 5.0, or 10.0 $\mu$m. For example, the large polyolefin non-wax particle component may have an average particle size in the range of 0.3 to 10.0 $\mu$m; or in the alternative, the large polyolefin non-wax particle component may have an average particle size in the range of 0.3 to 3.0 $\mu$m; or in the alternative, the large polyolefin non-wax particle component may have an average particle size in the range of 0.3 to 1.5 $\mu$m; or in the alternative, the large polyolefin non-wax particle component may have an average particle size in the range of 0.3 to 0.9 $\mu$m; or in the alternative, the large polyolefin non-wax particle component may have an average particle size in the range of 0.3 to 0.8 $\mu$m. The large polyolefin non-wax particle component may have any viscosity; for example, the large polyolefin non-wax particle component may have a viscosity of equal or greater than 6000 cps at 350 °F. (~176.6 °C.). All individual values and subranges of equal or greater than 6000 cps at 350 °F. (~176.6 °C.) are included herein and disclosed herein; for example, the viscosity of the large polyolefin non-wax particle component can be from a lower limit of 6000, 10,000, 20,000, 30,000, 100,000, 200,000 or 300,000 cps at 350 °F. (~176.6 °C.) to an upper limit of 10,000, 20,000, 30,000, 100,000, 200,000 or 300,000, 500,000, or 1000,000 cps at 350 °F. (~176.6 °C.). For example, the large polyolefin non-wax particle component may have a viscosity in the range of equal or greater than 6500 cps at 350 °F. (~176.6 °C.); or in the alternative, the large polyolefin non-wax particle component may have a viscosity in the range of equal or greater than 7000 cps at 350 °F. (~176.6 °C.); or in the alternative, the large polyolefin non-wax particle component may have a viscosity in the range of equal or greater than 10,000 cps at 350 °F; or in the alternative, the large polyolefin non-wax particle component may have a viscosity in the range of equal or greater than 100,000 cps at 350 °F. (~176.6 °C.); or in the alternative, the large polyolefin non-wax particle component may have a viscosity in the range of equal or greater than 500,000 cps at 350 °F (~176.6 °C.). The large polyolefin non-wax particle component may be polar; or in the alternative, the large polyolefin non-wax particle component may be partially or fully neutralized, for example, with a base such as, for example, but not limited to, potassium hydroxide (KOH).

The surfactant may an internal surfactant or external surfactant. Such surfactants are generally known to a person of ordinary skill in the art. Embodiments of the present invention use a surfactant to promote the formation of a stable dispersion. In selected embodiments, the surfactant may be a polymer, for example, a polar polymer, having a polar group as either a comonomer or grafted monomer. In one exemplary embodiment, the surfactant comprises one or more polar polyolefins, having a polar group as either a comonomer or grafted monomer. Typical polymers include ethylene-acrylic acid (EAA) and ethylene-methacrylic acid copolymers, such as those available under the trademarks PRIMACOR™ (trademark of The Dow Chemical Company), NUCREL™ (trademark of E.I. DuPont de Nemours), and ESCOR™ (trademark of ExxonMobil) and described in U.S. Pat. Nos. 4,599,392, 4,988,781, and 5,938,437, each of which is incorporated herein by reference in its entirety. Other polymers include ethylene ethyl acrylate (EEA) copolymer, ethylene methyl methacrylate (EMMA), and ethylene butyl acrylate (EBA). Other ethylene-carboxylic acid copolymer may also be used. Those having ordinary skill in the art will recognize that a number of other useful polymers may also be used.

Other surfactants that may be used include long chain fatty acids or fatty acid salts having from 12 to 60 carbon atoms. In other embodiments, the long chain fatty acid or fatty acid salt may have from 12 to 40 carbon atoms.

If the polar group of the polymer is acidic or basic in nature, the stabilizing polymer may be partially or fully neutralized with a neutralizing agent to form the corresponding salt. In certain embodiments, neutralization of the surfactant, such as a long chain fatty acid or EAA, may be from 25 to 200 percent on a molar basis; from 50 to 110 percent on a molar basis in other embodiments. For example, for EAA, the neutralizing agent is a base, such as ammonium hydroxide or potassium hydroxide, for example. Other neutralizing agents can include lithium hydroxide or sodium hydroxide, for example. In another alternative, the neutralizing agent may, for example, be any amine such as monoethanolamine, or 2-amino-2-methyl-1-propanol (AMP). Those having ordinary skill in the art will appreciate that the selection of an appropriate neutralizing agent depends on the specific composition formulated, and that such a choice is within the knowledge of those of ordinary skill in the art.

Additional surfactants that may be useful in the practice of the present invention include cationic surfactants, anionic surfactants, or a non-ionic surfactants. Examples of anionic surfactants include sulfonates, carboxylates, and phosphates. Examples of cationic surfactants include quaternary amines. Examples of non-ionic surfactants include block copolymers containing ethylene oxide and silicone surfactants. Surfactants useful in the practice of the present invention can be either external surfactants or internal surfactants. External surfactants are surfactants that do not become chemically reacted into the polymer during dispersion preparation. Examples of external surfactants useful herein include salts of dodecyl benzene sulfonic acid and lauryl sulfonic acid salt. Internal surfactants are surfactants that do become chemically reacted into the polymer during dispersion preparation. An example of an internal surfactant useful herein includes 2,2-dimethylol propionic acid and its salts.

In particular embodiments, the surfactant may be used in an amount in the range of less than about 60 percent by weight the solid content, that is, the combined weight of the small particle component and large particle component, used.

In another alternative embodiment the coating composition comprises at least one first dispersion, and at least one second dispersion.

The first dispersion may be any dispersion; for example, the first dispersion may an aqueous dispersion. The first dispersion comprises a small particle component, and a media component, for example, water. The first dispersion may further include a surfactant, as described hereinabove. The first dispersion may have any pH; for example, the first dispersion may have a pH of greater than 7.

The small particle component may be any wax, for example, the small particle component may be a polyolefin wax. Such polyolefin waxes include, but are not limited to, oxidized polyolefins such as oxidized polyethylenes or oxidized polypropylenes. The small particle component may have any average particle size; for example, the small particle component may have an average particle size of less than 0.2 $\mu$m. All individual values and subranges of less than 0.2 $\mu$m are included herein and disclosed herein; for example, the average particle size of the small particle component can be from a lower limit of 0.02, 0.03, 0.04, 0.05, 0.06, 0.07, 0.10, or 0.15 $\mu$m to an upper limit of 0.03, 0.04, 0.05, 0.06, 0.07, 0.10, 0.15, or 0.2 $\mu$m. For example, the small particle component may have an average particle size in the range of 0.02 to 0.15 $\mu$m; or in the alternative, the small particle component may have an average particle size in the range of 0.02 to 0.10 $\mu$m; or in the alternative, the small particle component may have an average particle size in the range of 0.02 to 0.05 $\mu$m; or in the alternative, the small particle component may have an average particle size in the range of 0.03 to 0.05 $\mu$m. The small particle component may have any viscosity; for example, the small particle component may have a viscosity of less than 6000 cps at 350 °F. (~176.6 °C.). All individual values and subranges of less than 6000 cps at 350 °F. (~176.6 °C.) are included herein and disclosed herein; for example, the viscosity of the small particle component can be from a lower limit of 1000, 2000, 2500, 3000, 4000, or 5000 cps at 350 °F. (~176.6 °C.) to an upper limit of 1500, 2000, 2500, 3000, 4000, 5000, or 6000 cps at 350 °F. (~176.6 °C.). For example, the small particle component may have a viscosity in the range of less than 5000 cps at 350 °F. (~176.6 °C.); or in the alternative, the small particle component may have a viscosity in the range of less than 4000 cps at 350 °F. (~176.6 °C.); or in the alternative, the small particle component may have a viscosity in the range of less than 3000 cps at 350 °F. (~176.6 °C.); or in the alternative, the small particle component may have a viscosity in the range of less than 2500 cps at 350 °F. (~176.6 °C.). The small particle component may be polar; or in the alternative, the small particle component may be partially or fully neutralized, for example, with a base such as potassium hydroxide (KOH). The first dispersion may comprise about less than or equal to 50 percent by weight of small particle component. All individual values and subranges of less than or equal to 50 weight percent are included herein and disclosed herein; for example, the small particle component weight percent can be from a lower limit of 5, 10, 15, 20, 25, 30, 35, 40, or 45 weight percent to an upper limit of 10, 15, 20, 25, 30, 35, 40, 45, or 50 weight percent. For example, first dispersion may comprise about less than or equal to 45 percent by weight of small particle component; or in the alternative, first dispersion may comprise about less than or equal to 40 percent by weight of small particle component; or in the alternative, first dispersion may comprise about less than or equal to 35 percent by weight of small particle component; or in the alternative, first dispersion may comprise about less than or equal to 30 percent by weight of small particle component.

The second dispersion may be any dispersion; for example, the second dispersion may an aqueous dispersion. The second dispersion comprises a large particle component, and a media component, for example, water. The first dispersion may further include a surfactant, as described hereinabove. The second dispersion may have any pH; for example, the second dispersion may have a pH of greater than 7.

The large particle component may be any wax, non-wax polymer or combinations thereof. For example, the large particle component may be a polyolefin wax, a non-wax polyolefin, or combinations thereof. The dispersion may comprise about less than or equal to 50 percent by weight of large particle component. All individual values and subranges of less than or equal to 50 weight percent are included herein and disclosed herein; for example, the large particle component weight percent can be from a lower limit of 5, 10, 15, 20, 25, 30, 35, 40, or 45 weight percent to an upper limit of 10, 15, 20, 25, 30, 35, 40, 45, or 50 weight percent. For example, dispersion may comprise about less than or equal to 45 percent by weight of large particle component; or in the alternative, dispersion may comprise about less than or equal to 40 percent by weight of large particle component; or in the alternative, dispersion may comprise about less than or equal to 35 percent by weight of large particle component; or in the alternative, dispersion may comprise about less than or equal to 30 percent by weight of large particle component.

Exemplary polyolefin waxes include, but are not limited to, oxidized polyolefins such as oxidized polyethylenes or oxidized polypropylenes. The large polyolefin wax particle component may have any average particle size; for example, the large polyolefin wax particle component may have an average particle size in the range of 0.3 to 0.9 $\mu$m. All individual values and subranges in the range of 0.3 to 0.9 $\mu$m are included herein and disclosed herein; for example, the average particle size of the large polyolefin wax particle component can be from a lower limit of 0.3, 0.4, 0.5, 0.6, 0.7 $\mu$m to an upper limit of 0.4, 0.5, 0.6, 0.7, or 0.8 $\mu$m. For example, the large polyolefin wax particle component may have an average particle size in the range of 0.3 to 0.9 $\mu$m; or in the alternative, the large polyolefin wax particle component may have an average particle size in the range of 0.3 to 0.8 $\mu$m; or in the alternative, the large polyolefin wax particle component may have an average particle size in the range of 0.3 to 0.7 $\mu$m; or in the alternative, the large polyolefin wax particle component may have an average particle size in the range of 0.3 to 0.6 $\mu$m. The large polyolefin wax particle component may have any viscosity; for example, the large polyolefin wax particle component may have a viscosity of less than 6000 cps at 350 °F. (~176.6 °C). All individual values and subranges of less than 6000 cps at 350 °F. (~176.6 °C) are included herein and disclosed herein; for example, the viscosity of the large polyolefin wax particle component can be from a lower limit of 1000, 2000, 2500, 3000, 4000, or 5000 cps at 350 °F. (~176.6 °C) to an upper limit of 1500, 2000, 2500, 3000, 4000, 5000, or 6000 cps at 350 °F. (~176.6 °C). For example, the large polyolefin wax particle component may have a viscosity in the range of less than 5000 cps at 350 °F. (~176.6 °C); or in the alternative, the large polyolefin wax particle component may have a viscosity in the range of less than 4000 cps at 350 °F. (~176.6 °C); or in the alternative, the large polyolefin wax particle component may have a viscosity in the range of less than 3000 cps at 350 °F. (~176.6 °C); or in the alternative, the large polyolefin wax particle component may have a viscosity in the range of less than 2500 cps at 350 °F. (~176.6 °C). The large polyolefin wax particle component may be polar; or in the alternative, the large polyolefin wax particle component may be partially or fully neutralized, for example, with a base such as potassium hydroxide (KOH).

Exemplary non-wax polymers include any non-oxidized polyolefins including, but are not limited to, polyolefins such as homopolymers of ethylene, copolymers of ethylene and at least one ethylenically unsaturated monomer selected from the group consisting of $C_3$-$C_{10}$ alpha monoolefins; $C_1$-$C_{12}$ alkyl esters of $C_3$-$C_{20}$ monocarboxylic acids; unsaturated $C_3$-$C_{20}$ mono- or dicarboxylic acids; anhydrides of unsaturated $C_4$-$C_8$ dicarboxylic acids; and vinyl esters of saturated $C_2$-$C_{18}$ carboxylic acids, homopolymers of propylene, and copolymers of propylene and at least one ethylenically unsaturated monomer selected from the group consisting of $C_2$ and $C_4$-$C_{10}$ alpha monoolefins; $C_1$-$C_{12}$ alkyl esters of $C_3$-$C_{20}$ monocarboxylic acids; unsaturated $C_3$-$C_{20}$ mono- or dicarboxylic acids; anhydrides of unsaturated $C_4$-$C_8$ dicarboxylic acids; and vinyl esters of saturated $C_2$-$C_{18}$ carboxylic acids. The large polyolefin non-wax particle component may have any average particle size; for example, the large polyolefin non-wax particle component may have an average particle size in the range of greater than 0.2 $\mu$m. All individual values and subranges in the range of greater than 0.2 $\mu$m are included herein and disclosed herein; for example, the average particle size of the large polyolefin non-wax particle component can be from a lower limit of 0.3, 0.4, 0.5, 0.6, 0.7 $\mu$m to an upper limit of 0.8, 0.9, 1.0, 1.5, 2.0, 3.0, 4.0, 5.0, or 10.0 $\mu$m. For example, the large polyolefin non-wax particle component may have an average particle size in the range of 0.3 to 10.0 $\mu$m; or in the alternative, the large polyolefin non-wax particle component may have an average particle size in the range of 0.3 to 3.0 $\mu$m; or in the alternative, the large polyolefin non-wax particle component may have an average particle size in the range of 0.3 to 1.5 $\mu$m; or in the alternative, the large polyolefin non-wax particle component may have an average particle size in the range of 0.3 to 0.9 $\mu$m; or in the alternative, the large polyolefin non-wax particle component may have an average particle size in the range of 0.3 to 0.8 $\mu$m. The large polyolefin non-wax particle component may have any viscosity; for example, the large polyolefin non-wax particle component may have a viscosity of equal or greater than 6000 cps at 350 °F. (~176.6 °C). All individual values and subranges of equal or greater than 6000 cps at 350 °F. (~176.6 °C) are included herein and disclosed herein; for example, the viscosity of the large polyolefin non-wax particle component can be from a lower limit of 6000, 10,000, 20,000, 30,000, 100,000, 200,000 or 300,000 cps at 350 °F. (~176.6 °C) to an upper limit of 10,000, 20,000, 30,000, 100,000, 200,000 or 300,000, 500,000, or 1000,000 cps at 350 °F. (~176.6 °C). For example, the large polyolefin non-wax particle component may have a viscosity in the range of equal or greater than 6500 cps at 350 °F. (~176.6 °C); or in the alternative, the large polyolefin non-wax particle component may have a viscosity in the range of equal or greater than 7000 cps at 350 °F. (~176.6 °C); or in the alternative, the large polyolefin non-wax particle component may have a viscosity in the range of equal or greater than 10,000 cps at 350 °F; or in the alternative, the large polyolefin non-wax particle component may have a viscosity in the range of equal or greater than 100,000 cps at 350 °F. (~176.6 °C); or in the alternative, the large polyolefin non-wax particle component may have a viscosity in the range of equal or greater than 500,000 cps at 350 °F (~176.6 °C). The large polyolefin non-wax particle component may be polar; or in the alternative, the large polyolefin non-wax particle component may be partially or fully neutralized, for example, with a base such as, for example, but not limited to, potassium hydroxide (KOH).

The coating composition may further include any additional additives. Exemplary additives include, but are not limited to, a wetting agent, surfactants, anti-static agents, antifoam agent, anti block, wax-dispersion pigments, a neutralizing agent, a thickener, a compatibilizer, a brightener, a rheology modifier, a biocide, a fungicide, and other additives known to those skilled in the art.

In production of the dispersions, the dispersions of the instant invention may be produced via any conventional methods. Such conventional methods are generally known to a person of ordinary skill in the art.

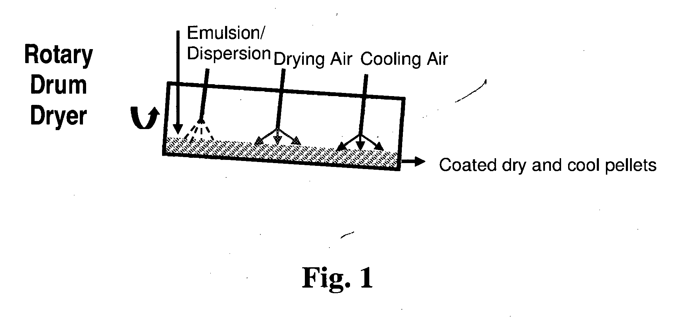

In application, referring to Fig. 1, the coating composition comprising a dispersion including a small particle component, a large particle component, a media component, for example, water, and optionally a surfactant is sprayed on the polymeric particulates in a rotary drum dryer thereby at least partially coating the polymeric particulates with the coating composition. The at least partially coated polymeric particulates with the coating composition are then subject to heat, and subsequently to cooling air thereby forming a coated polymeric particulate.

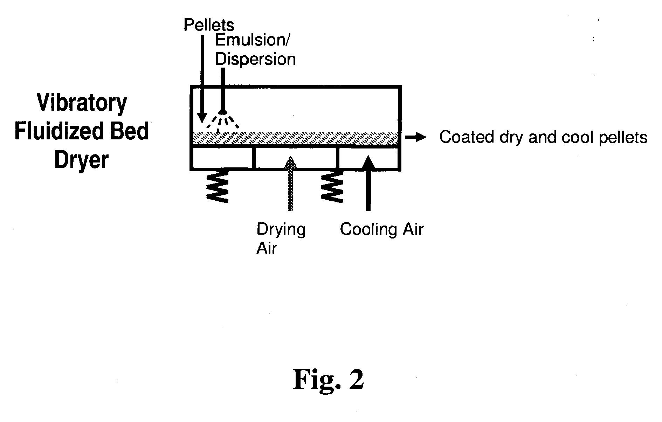

In an alternative application, referring to Fig. 2, the coating composition comprising a dispersion including a small particle component, a large particle component, a media component, for example, water, and optionally a surfactant is sprayed on the polymeric particulates in a vibratory fluidized bed dryer thereby at least partially coating the polymeric particulates with the coating composition. The at least partially coated polymeric particulates with the coating composition are then subject to heat, and subsequently to cooling air thereby forming a coated polymeric particulate.

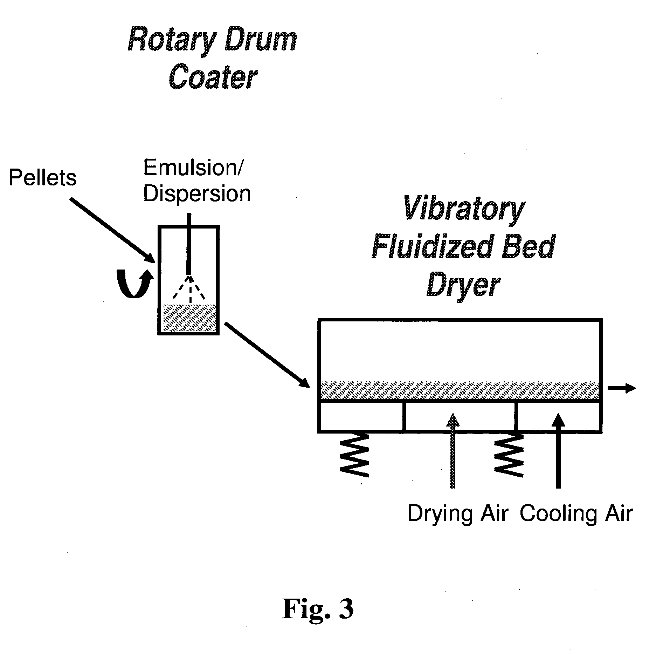

In an alternative application, referring to Fig. 3, the coating composition comprising a dispersion including a small particle component, a large particle component, a media component, for example, water, and optionally a surfactant is sprayed on the polymeric particulates in a rotary drum dryer thereby at least partially coating the polymeric particulates with the coating composition. The at least partially coated polymeric particulates with the coating composition are then transferred to a vibratory fluidized bed dryer, and subjected to heat first and subsequently to cooling air thereby forming a coated polymeric particulate.

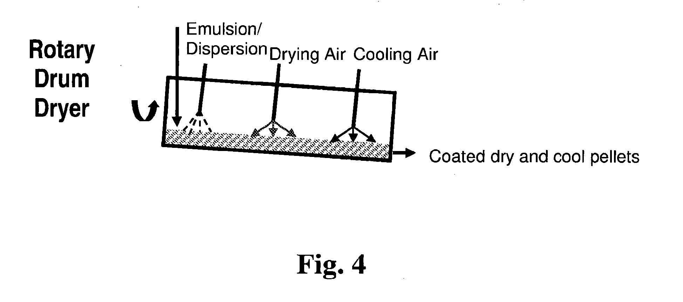

In application, referring to Fig. 4, the coating composition comprising a first dispersion and a second dispersion is sprayed on the polymeric particulates in a rotary drum dryer thereby at least partially coating the polymeric particulates with the coating composition. The first dispersion and the second dispersion may be sprayed on the polymeric particulates simultaneously; or in the alternative, the first dispersion and the second dispersion may be admixed prior to being sprayed on the polymeric particulates. The at least partially coated polymeric particulates with the coating composition are then subject to heat, and subsequently to cooling air thereby forming a coated polymeric particulate.

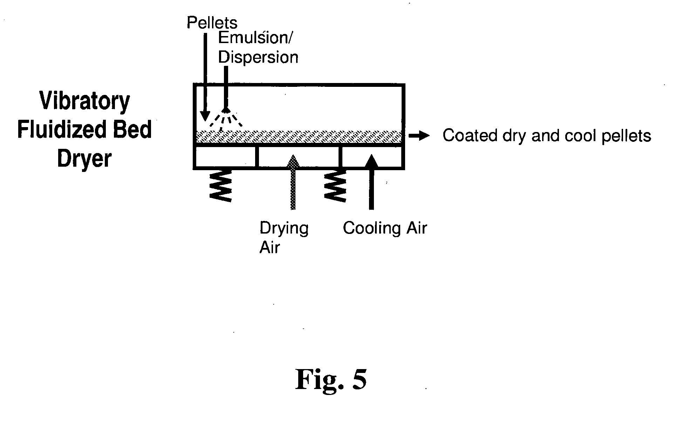

In an alternative application, referring to Fig. 5, the coating composition comprising a first dispersion and a second dispersion is sprayed on the polymeric particulates in a vibratory fluidized bed dryer thereby at least partially coating the polymeric particulates with the coating composition. The first dispersion and the second dispersion may be sprayed on the polymeric particulates simultaneously; or in the alternative, the first dispersion and the second dispersion may be admixed prior to being sprayed on the polymeric particulates. The at least partially coated polymeric particulates with the coating composition are then subject to heat, and subsequently to cooling air thereby forming a coated polymeric particulate.

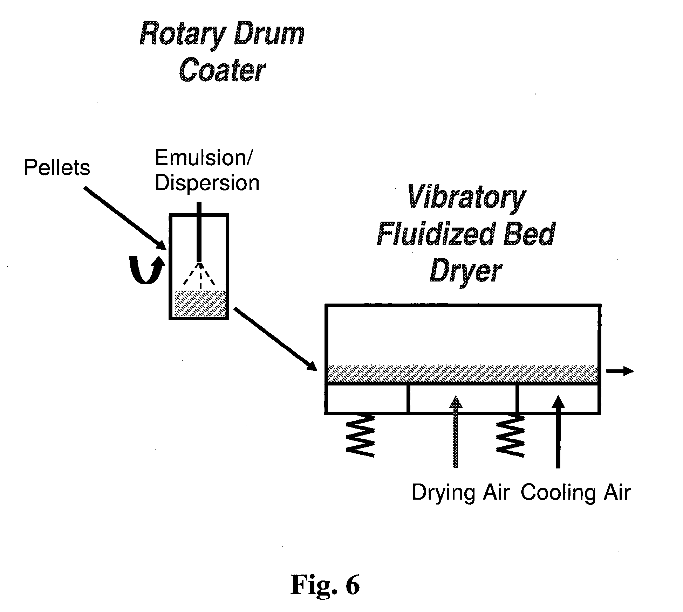

In an alternative application, referring to Fig. 6, the coating composition comprising a first dispersion and a second dispersion is sprayed on the polymeric particulates in a rotary drum dryer thereby at least partially coating the polymeric particulates with the coating composition. The first dispersion and the second dispersion may be sprayed on the polymeric particulates simultaneously; or in the alternative, the first dispersion and the second dispersion may be admixed prior to being sprayed on the polymeric particulates. The at least partially coated polymeric particulates with the coating composition are then transferred to a vibratory fluidized bed dryer, and subjected to heat first and subsequently to cooling air thereby forming a coated polymeric particulate.

The drying step may be via any conventional drying methods. Such conventional drying methods include but, are not limited to, air drying, convection oven drying, hot air drying, microwave oven drying, and/or infrared oven drying. The coating composition may be dried at any temperature; for example, it may be dried at a temperature in the range of less than the melting point temperature of the polymeric particulates. The temperature of the coated polymeric particulates may be raised to a temperature in the range of less than the melting point temperature of the polymeric particulates for a period of less than 40 minutes. All individual values and subranges from less than about 40 minutes are included herein and disclosed herein; for example, the temperature of the coated polymeric particulates may be raised to a temperature in the range of less than the melting point temperature of the polymeric particulates for a period of less than 20 minutes, or in the alternative, the temperature of the coated polymeric particulates may be raised to a temperature in the range of less than the melting point temperature of the polymeric particulates for a period of less than 5 minutes, or in another alternative, the temperature of the coated polymeric particulates may be raised to a temperature in the range of less than the melting point temperature of the polymeric particulates for a period of less than 0.5 to 300 seconds.

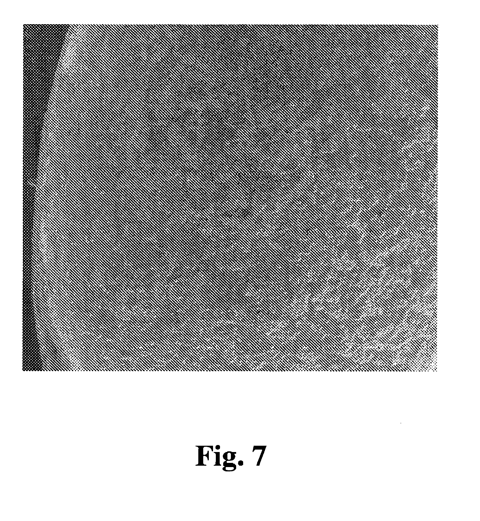

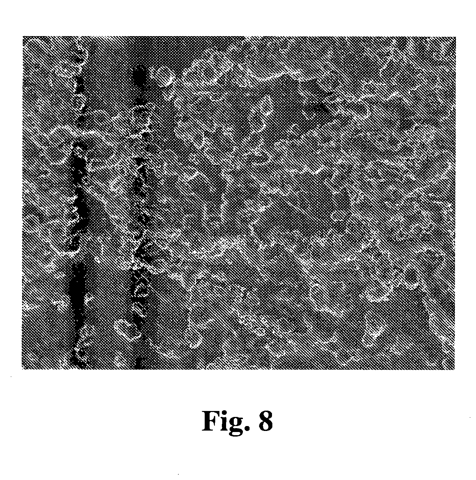

Referring to Figs. 7 and 8, the coated polymeric particulates of the instant invention have a coating present on at least a portion of at least one surface of the polymeric particulates. The coating comprises an interconnected media; and at least one discrete island at least partially embedded in the interconnected media. The coated polymeric particulates of the instant invention have a relative stickiness index, as described hereinbelow, of less than 20 percent. All individual values and subranges in the range of less than 20 percent are included herein and disclosed herein; for example, the coated polymeric particulates of the instant invention have a relative stickiness index of less than 18 percent; or in the alternative, the coated polymeric particulates of the instant invention have a relative stickiness index of less than 15 percent; or in the alternative, the coated polymeric particulates of the instant invention have a relative stickiness index of less than 14 percent; or in the alternative, the coated polymeric particulates of the instant invention have a relative stickiness index of less than 10 percent.

## Examples

The following examples illustrate the present invention but are not intended to limit the scope of the invention. The examples of the instant invention demonstrate improved properties with regard to blocking and/or stickiness problems.

## Example 1

Inventive sample: Affinity™ EG8180 (an ethylene-octene copolymer, 0.863 g/cc density, 0.5 g/10 minutes melt index) pellets were coated with coating composition having a 30 weight percent solids mixture of 0.04 micron average particle size oxidized polyethylene wax dispersion, and wax dispersion with an average particle size of 0.4 micron by applying the liquid dispersions on the pellets tumbled in a drum and then dried with hot air at 40 °C. The ratio of 0.04 micron to 0.4 micron dispersion was 1:4. The coating level was 3000 ppm on dry basis. The coated pellets did not have any free dust. The coated pellets were tested for blocking tendency by subjecting it to 275 lb/ft$^2$ and 42 °C for 1 week. The results are summarized in Table I.

Comparative Sample: Affinity™ EG8180 (an ethylene-octene copolymer, 0.863 g/cc density, 0.5 g/10 minutes melt index) pellets were coated with talc The coated pellets were tested for blocking tendency by subjecting it to 275 lb/ft$^2$ and 42 °C for 1 week. The results are summarized in Table I.

The Control Sample: Affinity™ EG8180 (an ethylene-octene copolymer, 0.863 g/cc density, 0.5 g/10 minutes melt index) pellets were tested for blocking tendency by subjecting it to 275 lb/ft$^2$ and 42 °C for 1 week. The results are summarized in Table I.

## Example 2

Inventive Samples: INFUSE™ OBC D9807 (an olefin block copolymer having 15 g/10 minutes melt index, and 0.866 g/cc overall density) pellets were coated with coating composition having a 30 weight percent solids mixture of 0.04 micron average particle size polyethylene oxide wax dispersion and polyethylene oxide wax dispersion with an average particle size of 0.4 micron by applying the liquid dispersions on the pellets tumbled in a drum and then dried with hot air at 40 °C. The ratio of 0.04 micron to 0.4 micron dispersion was 1:4. The coating level was 3000 ppm on dry basis. The pellets were tested for stickiness using the funnel test method. Two separate samples were heated at 42 °C for 3 and 8 days and then cooled to 21 °C. The discharge rates were compared with initial rates and with talc coated samples at same level of coating. A reduction of greater +15 percent in discharge rate indicates significant increase in surface tackiness. The sample coated with emulsion/dispersion mixture shows substantial improvement in anti-sticky behavior. The coated pellets did not have any free dust.

Comparative Sample: INFUSE™ OBC D9807 (an olefin-block copolymer having 15 g/10 minutes melt index, and 0.866 g/cc overall density) pellets were coated with talc, tested for stickiness using the funnel test method.

Control Sample: INFUSE™ OBC D9807 (an olefin block copolymer having 15 g/10 minutes melt index, and 0.866 g/cc overall density) pellets were tested for stickiness using the funnel test method.

The results are summarized in Table II.

## Example 3

Inventive Samples: NORDEL™ IP 4770 R (ethylene-propylene-diene-terpolymer) pellets were coated with a coating composition having a 30 weight percent solids mixture of 0.04 micron average particle size oxidized polyethylene wax dispersion and wax dispersion with an average particle size of 0.4 micron by applying the liquid dispersions on the pellets tumbled in a drum and then dried with hot air at 40 °C. The coating level was kept constant at 3000 ppm on dry basis. The samples coated with mixture of two dispersions show substantial improvement in blocking strength over single component or with PE dust coated at 10000 ppm. The coated pellets did not have any free dust.

The results are summarized in Table III.

## Example 4

Affinity EG8842 (ethylene-octene copolymer) pellets were coated with a coating composition having a 40 weight percent solids mixture of 0.04 micron average particle size oxidized polyethylene wax dispersion and dispersion of polyethylene Affinity PL1280 (ethylene-octane copolymer) with an average particle size of 10 microns by tumbling it in a drum coater and drying it with hot air at 40 °C. The coating level was 5000 ppm on dry basis. The coated pellets were tested for blocking tendency by subjecting it to 275 lb/ft$^2$ and 42 C for 24 hours. The coated pellets did not have any free dust. The results are summarized in Table IV.

### Examples 5

Affinity™ GA1900 (ethylene-octene copolymer, 0.870 g/cc density, Viscosity, Brookfield, @ 350°F (ASTM D 1084), max 9600 cPs, min 6800 cPs, target 8200 cPs) pellets were coated with a coating composition having a 30 weight percent solids mixture of 0.04 micron average particle size oxidized polyethylene wax dispersion and wax dispersion with an average particle size of 0.4 micron by applying the liquid dispersions on the pellets tumbled in a drum and then dried with hot air at 40 °C. The weight ratio of 0.04 micron to 0.4 micron dispersion was 1:4. The coating level was 3000 ppm on dry basis. Another set was coated with talc (MP 10-52, Specialty Minerals) at 3000 ppm. Pellets coated with dispersion mixture had no free-dust whereas talc coated pellets exhibited free-dust. The coated pellets were tested for blocking tendency by subjecting it to 195 lb/ft$^2$ and 42 °C for 2 weeks. The results are summarized in Table V. It can be seen that the pellets coated with dispersion mixture exhibited significantly less blocking tendency (lower unconfined yield strength) as compared to the uncoated and the talc samples.

### Example 6

Engage™ EG8400 (ethylene-octene copolymer having a 0.870 g/cc density, 30 g/10 minutes melt index) pellets were coated with a coating composition having a 30 weight percent solids mixture of 0.04 micron average particle size oxidized polyethylene wax dispersion and wax dispersion with an average particle size of 0.4 micron by applying the liquid dispersions on the pellets tumbled in a drum and then dried with hot air at 40 °C. Three weight ratios of 0.04 micron to 0.4 micron dispersions were tested 1:1, 4:1 and 1:4. The coating level was kept constant at 3000 ppm on dry basis. Another set was coated with talc (MP 10-52, Specialty Minerals) at 3000 ppm. Pellets coated with dispersion mixture had no free-dust whereas talc coated pellets exhibited free-dust. The pellet samples were tested for blocking tendency by subjecting it to 195 lb/ft$^2$ and 37 °C for 3 weeks. Significant improvement in performance can be seen over talc coating and uncoated pellets. The results are summarized in Table VI.

### Example 7

Engage™ EG8400 (ethylene-octene copolymer having a 0.870 g/cc density, 30 g/minutes melt index) pellets were coated with a coating composition having a 30 weight percent solids mixture of 0.04 micron average particle size polyethylene oxide wax dispersion and polyethylene oxide wax dispersion with an average particle size of 0.4 micron by applying the liquid dispersions on the pellets tumbled in a drum and then dried with hot air at 40 C. Various ratios of 0.04 micron to 0.4 micron dispersion were tested, namely 1:1 and 1:4. The coating level was 3000 ppm on dry basis.
The pellets were tested for stickiness using the funnel test method. Two separate samples were heated at 42 °C for 14 days and then cooled to 21 °C. The discharge rates were compared with initial rates and with talc coated samples at same level of coating. A reduction of greater +15 percent in discharge rate indicates significant increase in surface tackiness. Negative values imply that the coated samples became less sticky with aging. The sample coated with emulsion/dispersion mixture shows substantial improvement in anti-sticky behavior. The coated pellets did not have any free dust. The results are summarized in Table VII.

### Example 8

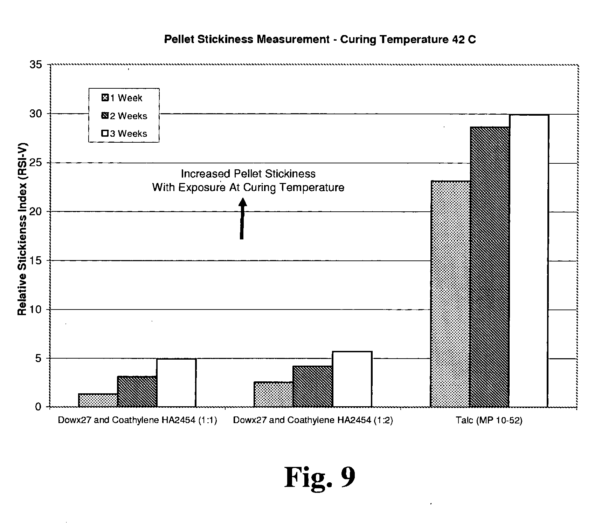

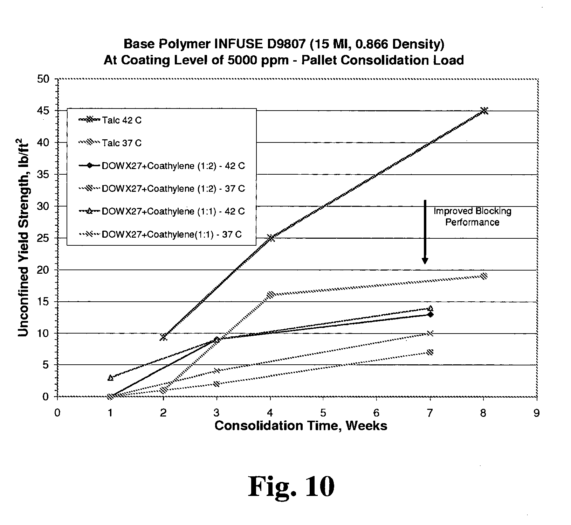

High melt index (~15 g/10 minutes) EO copolymer pellets with overall density of 0.866 were coated with a mixture of PE wax emulsion (DOWX™ 27) with average particle size of 40 nm and a dispersion of Coathylene™ HA2454 LDPE (particle size 10-22 □m) in water. The coating was applied by spraying the mixture onto the pellets, and the pellets were then dried with hot air while being tumbled in a rotary drum. A reference sample was made by dusting the uncoated pellets with MP 10-52 talc (Specialty Minerals).
The coated pellets were tested for blocking and stickiness performance. Referring to Fig. 9, the pellets coated with the inventive coating composition as described herein show significant improvement in stickiness as compared to the talc reference pellets. Referring to Fig. 10, the long term blocking test results indicate significant improvement in blocking performance as compared to talc coating.

### Example 9

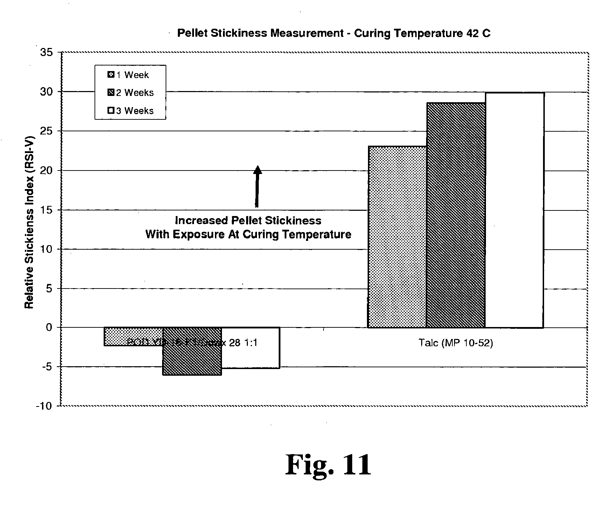

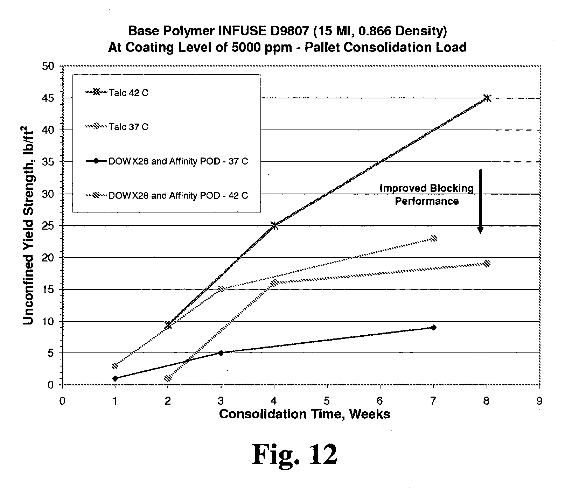

High melt index (~15 g/10 minutes) EO copolymer pellets with overall density of 0.866 were coated with a mixture of PE wax emulsion (DOWX™ 28) with average particle size of 40 nm and an aqueous dispersion of Affinity™ 8402 (average particle size 1 □m). The coating was applied by spraying the mixture to the pellets, and the pellets were then dried with hot air while being tumbled in a rotary drum. A reference sample was made by dusting the uncoated pellets with MP 10-52 talc (Specialty Minerals).
The coated pellets were tested for blocking and stickiness performance. Referring to Fig.11,, the pellets coated with the inventive coating composition as described herein show significant improvement in stickiness as compared to the talc reference pellets. Negative values of Relative Stickiness Index imply that the pellets stickiness has improved with ageing. Referring to Fig. 12, the long term blocking test results indicate significant improvement in blocking performance as compared to talc coating.

### Example 10

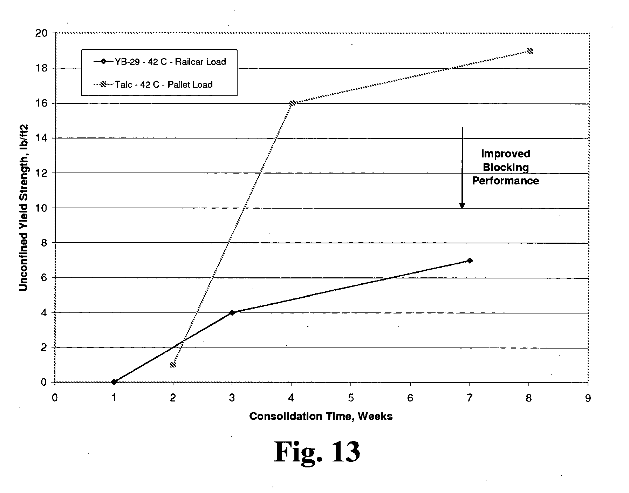

High melt index (~15 g/10 minutes) EO copolymer pellets with overall density of 0.866 (INFUSE™ D9807) were coated with an aqueous dispersion Affinity™ 8402 and Primacor™ 5990 in the ratio 90/10. The addition of Primacor™ to the Affinity™ 8402 dispersion reduces free dust on pellet surface. The coating was applied by spraying the inventive coating composition on the pellets, and the pellets were then dried with hot air while being tumbled in a rotary drum. The coated pellets were tested for blocking and stickiness performance. Referring to Fig. 13, the long term blocking test results indicate significant improvement in blocking performance of the pellets coated with the inventive coating composition as described herein as compared to talc coating pellets. Referring to Fig. 6, the pellets coated with the inventive coating composition as described herein show significant improvement in stickiness as compared to the talc reference pellets.

### Test Methods

Test methods include the following:

Density was measured according to ASTM D 792-03, Method B, in isopropanol.
Melt index ($I_2$) was measured at 190°C under a load of 2.16 kg according to ASTM D-1238-03.
Melt index ($I_5$) was measured at 190°C under a load of 5.0 kg according to ASTM D-1238-03.
Melt index ($I_{10}$) was measured at 190°C under a load of 10.0 kg according to ASTM D-1238-03.
Melt index ($I_{21}$) was measured at 190°C under a load of 21.6 kg according to ASTM D-1238-03.
Average Particle Size was determined via Beckman Coulter LS 13 320 Laser Diffraction Particle Size Analyzer.

### Blockiness Test

To quantify the blockiness of various soft elastomeric pellets and estimate their potential to block (or mass), the following test was employed. A given sample of pellets is consolidated under a pre-determined stress condition ($\square_1$) at storage temperature for predetermined duration. The sample is then crushed uniaxially at constant strain rate using an Instron™ machine. The peak stress ($\square_c$) corresponding to compressive failure of the sample is a measure of pellet blockiness.

To standardize the test conditions, typical values of highest stress are calculated for various shipping modes. The maximum stress ($lb/ft^2$) is calculated by multiplying the bulk density ($lb/ft^3$) with total height of the material (ft). A temperature of 37 °C was the temperature reference for testing.

The pellets are loaded into a 2" diameter cylinder with a height to diameter ratio of 2.5. It is made up of two halves held together by a hose clamp. Appropriate consolidation load is applied. The pellets under load are left in an oven at 37 °C for extended duration (typically 4 to 16 weeks).
The cell is then removed from the oven; consolidation load is removed and allowed to cool overnight in an environmental chamber at 21 °C. The cell is placed on the platform of Instron™ test machine. The two halves of the split cell are separated after removing the hose clamp. If the material is totally free-flowing, the pellets will not hold the form of a cylinder and simply collect into a pile. If the consolidated mass of pellets does hold the form of a cylinder, the Instron™ machine is used to measure the maximum force required to crush the cylinder. A constant strain rate of 2 mm/min was used for this test. In a typical force vs. time plot, the peak strength or peak force divided by the cross-sectional area of the cylinder is called the unconfined yield strength. The unconfined yield strength ($lb/ft^2$) is a measure of blockiness of pellets subjected to stress, time and temperature history. A zero value corresponds to free-flowing pellets.

**Funnel Test for Pellet Stickiness**

To quantify pellet-pellet stickiness, the funnel test was employed. This test is based on the basic concept that increased interparticle interaction (stickiness) will reduce discharge rate out of a steep funnel. The change in discharge rate can be related to change in surface properties of a sample.
The test apparatus consists of a steep glass funnel attached to a cylinder (4.15 inch diameter). The test is repeated 5 times for statistical purpose. The discharge rate of pellets is measured as received and after conditioning them at a given temperature for pre-determined duration. The conditioned pellets are cooled overnight at 21 °C to achieve constant temperature. The steps of the funnel test to test resins as received include: (1) Load the funnel with -2500 g of pellets; (2) Measure the time take to completely discharge the pellets; and (3) Repeat the test 5 times. The steps of the funnel test to test cured resins include: (1) Cure ~2500 g of sample at following temperatures (21 / 37 / 42 ° C) for X (4 and 8) week; (2) Remove the samples from the oven and allow it to cool for 12 hours at 21 °C. (3) Load the funnel with pellets; (4) Measure the time take to completely discharge the pellets; and (5) Repeat the test 5 times.
The change in discharge rate is normalized with initial rate to give a dimensionless quantity - RSI (Relative Stickiness Index).

$$\textbf{RSI (percent)} = \underline{\text{Change in discharge rate (Fresh sample – After Conditioning)}} \ \text{x} \ \ 100$$

Discharge rate of fresh sample
Discharge rate can be gravimetric (lb/s) or volumetric (ft$^3$/s).
By normalizing with discharge rate of fresh sample and using change in discharge rate in the numerator, the effect of granulation and friction can be eliminated.
This index is relative and not absolute. It measures change in stickiness or tackiness as compared to the fresh sample (with no stickiness/tackiness).

**Standard CRYSTAF Method**

Branching distributions are determined by crystallization analysis fractionation (CRYSTAF) using a CRYSTAF 200 unit commercially available from PolymerChar, Valencia, Spain. The samples are dissolved in 1,2,4 trichlorobenzene at 160°C (0.66 mg/mL) for 1 hr and stabilized at 95°C for 45 minutes. The sampling temperatures range from 95 to 30°C at a cooling rate of 0.2°C/min. An infrared detector is used to measure the polymer solution concentrations. The cumulative soluble concentration is measured as the polymer crystallizes while the temperature is decreased. The analytical derivative of the cumulative profile reflects the short chain branching distribution of the polymer.
The CRYSTAF peak temperature and area are identified by the peak analysis module included in the CRYSTAF Software (Version 2001.b, PolymerChar, Valencia, Spain). The CRYSTAF peak finding routine identifies a peak temperature as a maximum in the dW/dT curve and the area between the largest positive inflections on either side of the identified peak in the derivative curve. To calculate the CRYSTAF curve, the preferred processing parameters are with a temperature limit of 70°C and with smoothing parameters above the temperature limit of 0.1, and below the temperature limit of 0.3.

**Flexural/Secant Modulus/ Storage Modulus**

Samples are compression molded using ASTM D 1928. Flexural and 2 percent secant moduli are measured according to ASTM D-790. Storage modulus is measured according to ASTM D 5026-01 or equivalent technique.

**DSC Standard Method**

Differential Scanning Calorimetry results are determined using a TAI model Q1000 DSC equipped with an RCS cooling accessory and an autosampler. A nitrogen purge gas flow of 50 ml/min is used. The sample is pressed into a thin film and melted in the press at about 175°C and then air-cooled to room temperature (25°C). 3-10 mg of material is then cut into a 6 mm diameter disk, accurately weighed, placed in a light aluminum pan (ca 50 mg), and then crimped shut. The thermal behavior of the sample is investigated with the following temperature profile. The sample is rapidly heated to 180°C and held isothermal for 3 minutes in order to remove any previous thermal history. The sample is then cooled to -40°C at 10°C/min cooling rate and held at -40°C for 3 minutes. The sample is then heated to 150 °C at 10°C/min. heating rate. The cooling and second heating curves are recorded.
The DSC melting peak is measured as the maximum in heat flow rate (W/g) with respect to the linear baseline drawn between -30°C and end of melting. The heat of fusion is measured as the area under the melting curve between -30°C and the end of melting using a linear baseline.

Calibration of the DSC is done as follows. First, a baseline is obtained by running a DSC from -90 °C without any sample in the aluminum DSC pan. Then 7 milligrams of a fresh indium sample is analyzed by heating the sample to 180°C, cooling the sample to 140°C at a cooling rate of 10°C /min followed by keeping the sample isothermally at 140°C for 1 minute, followed by heating the sample from 140°C to 180°C at a heating rate of 10°C per minute. The heat of fusion and the onset of melting of the indium sample are determined and checked to be within 0.5°C from 156.6°C for the onset of melting and within 0.5 J/g from 28.71 J/g for the of fusion. Then deionized water is analyzed by cooling a small drop of fresh sample in the DSC pan from 25°C to -30°C at a cooling rate of 10°C per minute. The sample is kept isothermally at -30°C for 2 minutes and heat to 30°C at a heating rate of 10°C per minute. The onset of melting is determined and checked to be within 0.5°C from 0°C.

**GPC Method**

The gel permeation chromatographic system consists of either a Polymer Laboratories Model PL-210 or a Polymer Laboratories Model PL-220 instrument. The column and carousel compartments are operated at 140 °C. Three Polymer Laboratories 10-micron Mixed-B columns are used. The solvent is 1,2,4 trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160°C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polyethylene} = 0.431(M_{polystyrene})$.

Polyethylene equivalent molecular weight calculations are performed using Viscotek TriSEC software Version 3.0.

**ATREF**

Analytical temperature rising elution fractionation (ATREF) analysis is conducted according to the method described in U.S. Patent No. 4,798,081 and Wilde, L.; Ryle, T.R.; Knobeloch, D.C.; Peat, I.R.; Determination of Branching Distributions in Polyethylene and Ethylene Copolymers, J. Polym. Sci., 20, 441-455 (1982), which are incorporated by reference herein in their entirety. The composition to be analyzed is dissolved in trichlorobenzene and allowed to crystallize in a column containing an inert support (stainless steel shot) by slowly reducing the temperature to 20°C at a cooling rate of 0.1°C/min. The column is equipped with an infrared detector. An ATREF chromatogram curve is then generated by eluting the crystallized polymer sample from the column by slowly increasing the temperature of the eluting solvent (trichlorobenzene) from 20 to 120°C at a rate of 1.5°C/min.

**$^{13}$C NMR Analysis**

The samples are prepared by adding approximately 3g of a 50/50 mixture of tetrachloroethane-$d_2$/orthodichlorobenzene to 0.4 g sample in a 10 mm NMR tube. The samples are dissolved and homogenized by heating the tube and its contents to 150°C. The data are collected using a JEOL Eclipse™ 400MHz spectrometer or a Varian Unity Plus™ 400MHz spectrometer, corresponding to a $^{13}$C resonance frequency of 100.5 MHz. The data are acquired using 4000 transients per data file with a 6 second pulse repetition delay. To achieve minimum signal-to-noise for quantitative analysis, multiple data files are added together. The spectral width is 25,000 Hz with a minimum file size of 32K data points. The samples are analyzed at 130 °C in a 10 mm broad band probe. The comonomer incorporation is determined using Randall's triad method (Randall, J.C.; JMS-Rev. Macromol. Chem. Phys., C29, 201-317 (1989), which is incorporated by reference herein in its entirety).

**Mechanical Properties - Tensile, Hysteresis, and Tear**

Stress-strain behavior in uniaxial tension is measured using ASTM D 1708 microtensile specimens. Samples are stretched with an Instron at 500 percent min$^{-1}$ at 21°C. Tensile strength and elongation at break are reported from an average of 5 specimens.

100 percent and 300 percent Hysteresis is determined from cyclic loading to 100 percent and 300 percent strains using ASTM D 1708 microtensile specimens with an Instron™ instrument. The sample is loaded and unloaded at 267 percent min$^{-1}$ for 3 cycles at 21 °C. Cyclic experiments at 300 percent and 80°C are conducted using an environmental chamber. In the 80 °C experiment, the sample is allowed to equilibrate for 45 minutes at the test temperature before testing. In the 21 °C, 300 percent strain cyclic experiment, the retractive stress at 150 percent strain from the first unloading cycle is recorded. Percent recovery for all experiments are calculated from the first unloading cycle using the strain at which the load returned to the base line. The percent recovery is defined as:

$$\%Recovery = \frac{\varepsilon_f - \varepsilon_s}{\varepsilon_f} \times 100$$

where $\varepsilon_f$ is the strain taken for cyclic loading and $\varepsilon_s$ is the strain where the load returns to the baseline during the 1$^{st}$ unloading cycle.

**Block Index**

The ethylene/α-olefin interpolymers are characterized by an average block index, ABI, which is greater than zero and up to about 1.0 and a molecular weight distribution, $M_w/M_n$, greater than about 1.3. The average block index, ABI, is the weight average of the block index ("BI") for each of the polymer fractions obtained in preparative TREF (that is, fractionation of a polymer by Temperature Rising Elution Fractionation) from 20°C and 110°C, with an increment of 5°C (although other temperature increments, such as 1°C, 2°C, 10°C, also can be used):

$$ABI = \sum (w_i BI_i)$$

where $BI_i$ is the block index for the ith fraction of the inventive ethylene/α-olefin interpolymer obtained in preparative TREF, and $w_i$ is the weight percentage of the ith fraction. Similarly, the square root of the second moment about the mean, hereinafter referred to as the second moment weight average block index, can be defined as follows.

$$2^{nd} \text{ moment weight average BI} = \sqrt{\frac{\sum (w_i (BI_i - ABI)^2)}{\frac{(N-1)\sum w_i}{N}}}$$

where N is defined as the number of fractions with $BI_i$ greater than zero. BI is defined by one of the two following equations (both of which give the same BI value):

$$BI = \frac{1/T_X - 1/T_{XO}}{1/T_A - 1/T_{AB}} \text{ or } BI = -\frac{LnP_X - LnP_{XO}}{LnP_A - LnP_{AB}}$$

where $T_X$ is the ATREF (that is, analytical TREF) elution temperature for the ith fraction (preferably expressed in Kelvin), $P_X$ is the ethylene mole fraction for the ith fraction, which can be measured by NMR or IR as described below. $P_{AB}$ is the ethylene mole fraction of the whole ethylene/α-olefin interpolymer (before fractionation), which also can be measured by NMR or IR. $T_A$ and $P_A$ are the ATREF elution temperature and the ethylene mole fraction for pure "hard segments" (which refer to the crystalline segments of the interpolymer). As an approximation or for polymers where the "hard segment" composition is unknown, the $T_A$ and $P_A$ values are set to those for high density polyethylene homopolymer.

$T_{AB}$ is the ATREF elution temperature for a random copolymer of the same composition (having an ethylene mole fraction of $P_{AB}$) and molecular weight as the olefin block copolymer. $T_{AB}$ can be calculated from the mole fraction of ethylene (measured by NMR) using the following equation:

$$\mathrm{Ln}\ P_{AB} = \alpha/T_{AB} + \beta$$

where $\alpha$ and $\beta$ are two constants which can be determined by a calibration using a number of well characterized preparative TREF fractions of a broad composition random copolymer and/or well characterized random ethylene copolymers with narrow composition. It should be noted that $\alpha$ and $\beta$ may vary from instrument to instrument. Moreover, one would need to create an appropriate calibration curve with the polymer composition of interest, using appropriate molecular weight ranges and comonomer type for the preparative TREF fractions and/or random copolymers used to create the calibration. There is a slight molecular weight effect. If the calibration curve is obtained from similar molecular weight ranges, such effect would be essentially negligible. In some embodiments, random ethylene copolymers and/or preparative TREF fractions of random copolymers satisfy the following relationship:

$$\mathrm{Ln}\ P = -237.83/T_{ATREF} + 0.639$$

The above calibration equation relates the mole fraction of ethylene, P, to the analytical TREF elution temperature, $T_{ATREF,}$ for narrow composition random copolymers and/or preparative TREF fractions of broad composition random copolymers. $T_{XO}$ is the ATREF temperature for a random copolymer of the same composition (that is, the same comonomer type and content) and the same molecular weight and having an ethylene mole fraction of $P_X$. $T_{XO}$ can be calculated from $\mathrm{Ln}P_X = \alpha/T_{XO} + \beta$ from a measured $P_X$ mole fraction. Conversely, $P_{XO}$ is the ethylene mole fraction for a random copolymer of the same composition (that is, the same comonomer type and content) and the same molecular weight and having an ATREF temperature of $T_X$, which can be calculated from $\mathrm{Ln}\ P_{XO} = \alpha/T_X + \beta$ using a measured value of $T_X$. Once the block index (BI) for each preparative TREF fraction is obtained, the weight average block index, ABI, for the whole polymer can be calculated.

**Table I**

| Coating Type | Coating Temperature, °C | Performance (unconfined yield strength), lb/ft2 |
| --- | --- | --- |
| Uncoated | - | 686 |
| Talc | 30 | 42 |
| Emulsion/Dispersion Mixture | 30 | 27 |

**Table II**

| Days | Uncoated | 0.4 micron + 0.04 micron oxidized PE dispersion mixture (4:1 ratio) at 3000 ppm level | Talc MP 10-52 (3000 ppm) |
| --- | --- | --- | --- |
| | | Unconfined Yield Strength, lb/ft$^2$ | Unconfined Yield Strength, lb/ft$^2$ |
| 0 | Does not flow, very sticky | 202.6 | 198.6 |
| 3 | Does not flow, very sticky | 191.3 | 160.5 |
| 8 | Does not flow, very sticky | 189.7 | 156.0 |

**Table III**

| Product Type | Coating level of 0.04 micron dispersion, ppm | Coating level of 0.4 micron dispersion, ppm | Coathylene HA 2454 ppm (PE Dust) | Oven Temp °C | Hours | Unconfined Yield Strength, lb/ft2 |
|---|---|---|---|---|---|---|
| NORDEL IP 4770 R | 1500 | 1500 | --- | 42 | 72 | 4 |
| NORDEL IP 4770 R | 2000 | 1000 | --- | 42 | 72 | 7 |
| NORDEL IP 4770 R | --- | 3000 | --- | 42 | 72 | 11 |
| NORDEL IP 4770 R | --- | --- | 10000 | 42 | 72 | 12 |

**Table IV**

| Type of Coating | Average Unconfined Yield Strength, lb/ft2 |
|---|---|
| Uncoated | 160 |
| Coated with dispersion mixture | 30 |

**Table V**

| Coating Type | Unconfined Yield Strength, lb/ft2 |
|---|---|
| No Coating | 146 |
| Dispersion Mixture | 73 |
| Talc (MP 10-52) | 163 |

**Table VI**

| Coating Type | Unconfined Yield Strength, lb/ft2 |
|---|---|
| Uncoated EG8400 | 91 |
| Talc (MP1052) | 36 |
| Dispersion Mixture (4:1) | 22 |
| Dispersion Mixture (1:1) | 21 |
| Dispersion Mixture (1:4) | 31 |

**Table VII**

| Coating Type | Coating Level, ppm | % Change in Discharge Rate |
|---|---|---|
| Dispersion Mixture (0.04 micron + 0.4 micron) (1:4) | 3000 | -17 |
| Dispersion Mixture (0.04 micron + 0.4 micron) (1:1) | 3000 | -3 |
| Uncoated | 0 | **23** |
| Talc (MP-10-52) | 3000 | **14** |

**Claims**

1. A coated polymeric particulate obtained by the application of a coating composition to a polymeric particulate;
   said coating composition being present on at least a portion of at least one surface of said polymeric particulate, wherein said coating composition comprises an aqueous dispersion comprising;
   a small particle component, wherein said small particle component comprises a polyolefin polymer having an average particle size in the range of 0.02 to 0.15 μm;
   a large particle component, wherein said large particle component comprises a polyolefin polymer having an average particle size in the range of 0.3 to 0.8 μm; and
   water.

2. A coated polymeric particulate according to claim 1, wherein the small particle component is a wax and the large particle component is a wax, a non-wax polymer or a combination thereof.

3. A coated polymeric particulate according to claim 1 or 2, wherein said small particle component comprises a polyolefin wax having a viscosity of less than 6000 cps at 176.6°C (350°F); and said large particle component comprises a non-wax polyolefin having a viscosity of equal or greater than 6000 cps at 176.6°C (350°F).

4. A coated polymeric particulate according to claim 1-3, wherein the coating composition further contains a surfactant.

5. A coated polymeric particulate according to claims 1-4, wherein the aqueous dispersion comprises less than or equal to 75% by weight of solid content.

6. A coated polymeric particulate according to claims 1-5, wherein the aqueous dispersion comprises less than or equal to 50% of small particle components.

7. A coated polymeric particulate according to claims 1-5, wherein the aqueous dispersion comprises less than or equal to 50% of the large particle component.

8. A process for coating a polymeric particulate comprising the steps of:

   selecting a first aqueous dispersion comprising a small particle component, wherein said small particle component comprises a polymer having an average particle size in the range of 0.02 to 0.15 μm;
   selecting a second dispersion comprising a large particle component, wherein said large particle component comprises a polymer having an average particle size in the range of 0.3 to 0.8 μm; or
   selecting an aqueous dispersion comprising both a small particle component, wherein said small particle component comprises a polyolefin polymer having an average particle size in the range of 0.02 to 0.15 μm, and a large particle component, wherein said large particle component comprises a polyolefin polymer having an average particle size in the range of 0.3 to 0.8 μm;
   applying said first dispersion and said second dispersion or said aqueous dispersion comprising both small and large particle components to said polymeric particulate;
   thereby coating said polymeric particulate.

9. A process according to claim 8,
   wherein a wax is used as the small particle component and a wax, a non-wax polymer or a combination thereof is used as the large particle component.

10. A process for coating a polymeric particulate according to claim 8 or 9, wherein said small particle component comprises a polyolefin wax having a viscosity of less than 6000 cps at 176.6°C (350°F), and wherein said large particle component comprises a non-wax polyolefin having a viscosity of equal to or greater than 6000 cps at 176.6°C (350°F).

11. The process according to anyone of claims 8 to 10, wherein said first dispersion and said second dispersion are admixed together prior to being applied to said polymeric particulate.

12. The process according to anyone of claims 8 to 10, wherein said first dispersion and said second dispersion are applied to said polymeric particulate simultaneously.

**13.** The process according to anyone of claims 8 to 12, wherein said process comprises the step of removing at least a portion of the water.

**14.** The process according to anyone of claims 8 to 13, wherein the second dispersion is an aqueous dispersion.

**Patentansprüche**

**1.** Beschichtetes Polymerpartikelmaterial, erhalten durch das Aufbringen einer Beschichtungszusammensetzung auf ein Polymerpartikelmaterial;
wobei die Beschichtungszusammensetzung auf mindestens einem Teil mindestens einer Oberfläche des Polymerpartikelmaterials vorhanden ist, wobei die Beschichtungszusammensetzung eine wässrige Dispersion umfasst, welche umfasst:

eine Kleinpartikelkomponente, wobei die Kleinpartikelkomponente ein Polyolefinpolymer umfasst, welches eine durchschnittliche Partikelgröße im Bereich von 0,02 bis 0,15 $\mu$m aufweist;
eine Großpartikelkomponente, wobei die Großpartikelkomponente ein Polyolefinpolymer umfasst, welches eine durchschnittliche Partikelgröße im Bereich von 0,3 bis 0,8 $\mu$m aufweist; und
Wasser.

**2.** Beschichtetes Polymerpartikelmaterial nach Anspruch 1, wobei die Kleinpartikelkomponente ein Wachs ist und die Großpartikelkomponente ein Wachs, ein Nicht-Wachs-Polymer oder eine Kombination davon ist.

**3.** Beschichtetes Polymerpartikelmaterial nach Anspruch 1 oder 2, wobei die Kleinpartikelkomponente ein Polyolefinwachs umfasst, welches eine Viskosität von weniger als 6000 cps bei 176,6°C (350°F) aufweist; und die Großpartikelkomponente ein Nicht-Wachs-Polyolefin umfasst, welches eine Viskosität von gleich oder größer als 6000 cps bei 176,6°C (350°F) aufweist.

**4.** Beschichtetes Polymerpartikelmaterial nach Anspruch 1-3, wobei die Beschichtungszusammensetzung weiterhin ein oberflächenaktives Mittel enthält.

**5.** Beschichtetes Polymerpartikelmaterial nach Ansprüchen 1-4, wobei die wässrige Dispersion einen Feststoffgehalt von weniger als oder gleich 75 Gew.-% aufweist.

**6.** Beschichteter Polymerpartikelmaterial nach Ansprüchen 1-5, wobei die wässrige Dispersion weniger als oder gleich 50% Kleinpartikelkomponenten aufweist.

**7.** Beschichtetes Polymerpartikelmaterial nach Ansprüchen 1-5, wobei die wässrige Dispersion weniger als oder gleich 50% der Großpartikelkomponente aufweist.

**8.** Verfahren zum Beschichten eines Polymerpartikelmaterials, umfassend die Schritte von:

Auswählen einer ersten wässrigen Dispersion, welche eine Kleinpartikelkomponente umfasst, wobei die Kleinpartikelkomponente ein Polymer umfasst, welches eine durchschnittliche Partikelgröße im Bereich von 0,02 bis 0,15 $\mu$m aufweist;
Auswählen einer zweiten Dispersion, welche eine Großpartikelkomponente umfasst, wobei die Großpartikelkomponente ein Polymer umfasst, welches eine durchschnittliche Partikelgröße im Bereich von 0,3 bis 0,8 $\mu$m aufweist; oder
Auswählen einer wässrigen Dispersion, welche sowohl eine Kleinpartikelkomponente, wobei die Kleinpartikelkomponente ein Polyolefinpolymer umfasst, welches eine durchschnittliche Partikelgröße im Bereich von 0,02 bis 0,15 $\mu$m aufweist, als auch eine Großpartikelkomponente, wobei die Großpartikelkomponente ein Polyolefinolymer umfasst, welches eine durchschnittliche Partikelgröße im Bereich von 0,3 bis 0,8 $\mu$m aufweist, umfasst;
Aufbringen der ersten Dispersion und der zweiten Dispersion oder der wässrigen Dispersion, welche sowohl Klein- als auch Großpartikelkomponenten umfasst, auf das Polymerpartikelmaterial;
dadurch Beschichten des Polymerpartikelmaterials.

**9.** Verfahren nach Anspruch 8,
wobei ein Wachs als Kleinpartikelkomponente verwendet wird, und ein Wachs, ein Nicht-Wachs-Polymer oder eine Kombination davon als Großpartikelkomponente verwendet wird.

10. Verfahren zum Beschichten eines Polymerpartikelmaterials nach Anspruch 8 oder 9, wobei die Kleinpartikelkomponente ein Polyolefinwachs umfasst, welches eine Viskosität von weniger als 6000 cps bei 176,6°C (350°F) aufweist,
und
wobei die Großpartikelkomponente ein Nicht-Wachs-Polyolefin aufweist, welches eine Viskosität von gleich oder größer als 6000 cps bei 176,6°C (350°F) aufweist.

11. Verfahren nach einem der Ansprüche 8 bis 10, wobei die erste Dispersion und die zweite Dispersion zusammen gemischt werden, bevor sie auf das Polymerpartikelmaterial aufgebracht werden.

12. Verfahren nach einem der Ansprüche 8 bis 10, wobei die erste Dispersion und die zweite Dispersion gleichzeitig auf das Polymerpartikelmaterial aufgebracht werden.

13. Verfahren nach einem der Ansprüche 8 bis 12, wobei das Verfahren den Schritt des Entfernens mindestens eines Teils des Wassers umfasst.

14. Verfahren nach einem der Ansprüche 8 bis 13, wobei die zweite Dispersion eine wässrige Dispersion ist.


## Revendications

1. Une matière particulaire polymère revêtue obtenue par l'application d'une composition de revêtement sur une matière particulaire polymère ;
ladite composition de revêtement étant présente sur au moins une partie d'au moins une surface de ladite matière particulaire polymère, dans laquelle ladite composition de revêtement comprend une dispersion aqueuse comprenant ;
un constituant à petites particules, ledit constituant à petites particules comprenant un polymère polyoléfinique ayant une taille moyenne de particules comprise dans la gamme allant de 0,02 à 0,15 μm ;
un constituant à grosses particules, ledit constituant à grosses particules comprenant un polymère polyoléfinique ayant une taille moyenne de particules comprise dans la gamme allant de 0,3 à 0,8 μm ; et
de l'eau.

2. Une matière particulaire polymère revêtue selon la revendication 1, dans laquelle le constituant à petites particules est une paraffine et le constituant à grosses particules est une paraffine, un polymère non paraffinique ou une combinaison de ceux-ci.

3. Une matière particulaire polymère revêtue selon la revendication 1 ou la revendication 2, dans laquelle ledit constituant à petites particules comprend une paraffine polyoléfinique ayant une viscosité inférieure à 6 000 cps à 176,6 °C (350 °F) ; et ledit constituant à grosses particules comprend une polyoléfine non paraffinique ayant une viscosité égale ou supérieure à 6 000 cps à 176,6 °C (350 °F).

4. Une matière particulaire polymère revêtue selon la revendication 1 à la revendication 3, dans laquelle la composition de revêtement comprend de surcroît un tensioactif.

5. Une matière particulaire polymère revêtue selon les revendications 1 4, dans laquelle la dispersion aqueuse a une teneur en solide inférieure ou égale à 75 % en poids.

6. Une matière particulaire polymère revêtue selon les revendications 1 à 5, dans laquelle la dispersion aqueuse comprend une quantité inférieure ou égale à 50 % de constituants à petites particules.

7. Une matière particulaire polymère revêtue selon les revendications 1 à 5, dans laquelle la dispersion aqueuse comprend une quantité inférieure ou égale à 50 % du constituant à grosses particules.

8. Un procédé pour revêtir une matière particulaire polymère comprenant les étapes consistant à :

sélectionner une première dispersion aqueuse comprenant un constituant à petites particules, ledit constituant à petites particules comprenant un polymère ayant une taille moyenne de particules comprise dans la gamme allant de 0,02 à 0,15 μm ;

sélectionner une deuxième dispersion comprenant un constituant à grosses particules, ledit constituant à grosses particules comprenant un polymère ayant une taille moyenne de particules comprise dans la gamme allant de 0,3 à 0,8 μm ; ou

sélectionner une dispersion aqueuse comprenant à la fois un constituant à petites particules, ledit constituant à petites particules comprenant un polymère polyoléfinique ayant une taille moyenne de particules comprise dans la gamme allant de 0,02 à 0,15 μm, et un constituant à grosses particules, ledit constituant à grosses particules comprenant un polymère polyoléfinique ayant une taille moyenne de particules comprise dans la gamme allant de 0,3 à 0,8 μm ;

appliquer ladite première dispersion et ladite deuxième dispersion ou ladite dispersion aqueuse comprenant les constituants à la fois à petites et à grosses particules sur ladite matière particulaire polymère ;

revêtant de ce fait ladite matière particulaire polymère.

9. Un procédé selon la revendication 8,
dans lequel une paraffine est utilisée comme constituant à petites particules et une paraffine, un polymère non paraffinique ou une combinaison de ceux-ci sont utilisés comme constituant à grosses particules.

10. Un procédé pour revêtir une matière particulaire polymère selon la revendication 8 ou la revendication 9, dans lequel ledit constituant à petites particules comprend une paraffine polyoléfinique ayant une viscosité inférieure à 6 000 cps à 176,6 °C (350 °F), et
dans lequel ledit constituant à grosses particules comprend une polyoléfine non paraffinique ayant une viscosité égale ou supérieure à 6 000 cps à 176,6 °C (350 °F).

11. Le procédé selon l'une quelconque des revendications 8 à 10, dans lequel ladite première dispersion et ladite deuxième dispersion sont mélangées ensemble avant d'être appliquées sur ladite matière particulaire polymère.

12. Le procédé selon l'une quelconque des revendications 8 à 10, dans lequel ladite première dispersion et ladite deuxième dispersion sont appliquées sur ladite matière particulaire polymère simultanément.

13. Le procédé selon l'une quelconque des revendications 8 à 12, ledit procédé comprenant l'étape consistant à retirer au moins une partie de l'eau.

14. Le procédé selon l'une quelconque des revendications 8 à 13, dans lequel ladite deuxième dispersion est une dispersion aqueuse.

Fig. 1

**Vibratory Fluidized Bed Dryer**

Pellets

Emulsion/ Dispersion

Coated dry and cool pellets

Drying Air

Cooling Air

## Fig. 2

**Fig. 3**

**Rotary Drum Dryer**

Fig. 4

**Vibratory Fluidized Bed Dryer**

Pellets
Emulsion/ Dispersion

Coated dry and cool pellets

Drying Air    Cooling Air

## Fig. 5

Fig. 6

**Fig. 7**

**Fig. 8**

Fig. 9

**Base Polymer INFUSE D9807 (15 MI, 0.866 Density)
At Coating Level of 5000 ppm - Pallet Consolidation Load**

Fig. 10

**Fig. 11**

**Base Polymer INFUSE D9807 (15 MI, 0.866 Density)**
**At Coating Level of 5000 ppm - Pallet Consolidation Load**

Fig. 12

Fig. 13

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0410914 A1
- US 3645992 A, Elston
- US 4076698 A, Anderson
- US 5272236 A
- US 5278272 A
- US 6566446 B
- US 6538070 B
- US 6448341 B
- US 6316549 B
- US 6111023 A
- US 5869575 A
- US 5844045 A
- US 5677383 A
- WO 2005090427 A
- US 60553906 B
- US 5504172 A
- WO 0001745 A
- US 376835 A
- US 5565521 A
- US 4599392 A
- US 4988781 A
- US 5938437 A
- US 4798081 A

### Non-patent literature cited in the description

- Mixing of Powders. Handbook of Powder Science and Technology. Chapman and Hall, 1997, 568-585
- **WILDE, L. ; RYLE, T.R. ; KNOBELOCH, D.C. ; PEAT, I.R.** Determination of Branching Distributions in Polyethylene and Ethylene Copolymers. *J. Polym. Sci.,* 1982, vol. 20, 441-455
- **RANDALL, J.C.** *JMS-Rev. Macromol. Chem. Phys.,* 1989, vol. C29, 201-317